# EUROPEAN PATENT APPLICATION

(11) **EP 4 851 911 A1**
(43) Date of publication of application: **09.12.2026**
(21) Application number: 25748347.9
(22) Date of filing: 17.01.2025
(51) Int. Cl.: G06Q 50/02, A01G 7/00

(54) **INFORMATION PROCESSING DEVICE, INFORMATION PROCESSING METHOD, AND PROGRAM**

(30) Priority: 02.02.2024 JP 2024014620
(71) Applicant: Sony Group Corporation, Tokyo 108-0075 (JP)
(72) Inventor: SUZUKI, Godai, Naka-gun, Kanagawa 255-0003 (JP); FUNABASHI, Masatoshi, Naka-gun, Kanagawa 255-0003 (JP)
(74) Representative: D Young & Co LLP
(86) International application number: PCT/JP2025/001277
(87) International publication number: WO 2025/164351

(57) **Abstract**

The present technology relates to an information processing apparatus, an information processing method, and a program that make it possible to evaluate ecosystems properly.

An integration index value obtained by integrating a plurality of kinds of diversity index values related to biodiversity is calculated on the basis of the plurality of kinds of diversity index values. The present technology can be applied to, for example, evaluate an ecosystem of, for example, a farm.

## Description

### Technical Field

The present technology relates to an information processing apparatus, an information processing method, and a program, and in particular, to an information processing apparatus, an information processing method, and a program that make it possible to, for example, evaluate an ecosystem properly.

### Background Art

For example, Patent Literature 1 discloses a technology used to present a combination of plant species that increases the species diversity of soil microbiome, using an evaluation method by which the species diversity is increased. Further, for example, Patent Literature 2 discloses a technology that outputs vegetation environment improvement information and species-group diversity enhancement information for urban greening plans, that is, a technology used to predict, as effects of the urban greening plans, the effects of enhancing green networks and increasing the diversity of inhabitant species group. However, there is no disclosure about a technology used to create the urban greening plans.

### Citation List

### Patent Literature

Patent Literature 1: WO 2023/002658
Patent Literature 2: Japanese Patent Application Laid-open No. 2009-136265

### Disclosure of Invention

### Technical Problem

In recent years, Synecoculture (registered trademark) or Kyosei Nouhou (registered trademark) (a collaborative living agricultural approach) has attracted attention. Synecoculture (registered trademark) or Kyosei Nouhou (registered trademark) makes it possible to produce practically useful plants in ecologically optimized environment, without using any plowing, fertilizers, agricultural chemicals, or anything else except for seeds and saplings. In the production of practically useful plants, thinning-out and harvesting is essentially performed in an environment in which various plants grow in a mixed and dense manner, with a greater diversity than the diversity in natural ecosystems being provided due to vegetation arrangement. Synecoculture (registered trademark) or Kyosei Nouhou (registered trademark) makes it possible to introduce a various range of plants and to build augmented ecosystems in which the biodiversity and ecosystem functions are enhanced.

There is a method for calculating an index value (hereinafter also referred to as a diversity index value) related to the biodiversity in various places including not only places in which Synecoculture (registered trademark) or Kyosei Nouhou (registered trademark) is executed, but also places in which existing farming (such as conventional farming practices, organic farming, and natural farming) is executed, and places in which greening plans are executed. The method is an evaluation method for evaluating ecosystems in the various places.

However, there are various kinds of index values as diversity index values. In some cases, a certain kind of diversity index value is not favorable when another kind of diversity index value is favorable. Thus, it may be difficult to evaluate an ecosystem properly only using a specific kind of diversity index value. For example, when a certain kind of diversity index value is favorable but another kind of diversity index value is not favorable for an ecosystem and when the ecosystem is evaluated using the favorable diversity index value of the certain kind, the ecosystem may be evaluated improperly.

The present technology has been made in view of the circumstances described above and it is an object of the present technology to make it possible to evaluate ecosystems properly.

### Solution to Problem

An information processing apparatus or program according to the present technology is an information processing apparatus that includes a calculator that calculates, on the basis of a plurality of kinds of diversity index values related to biodiversity, an integration index value obtained by integrating the plurality of kinds of diversity index values; or a program that causes a computer to operate as such an information processing apparatus.

An information processing method according to the present technology is an information processing method that includes calculating, on the basis of a plurality of kinds of diversity index values related to biodiversity, an integration index value obtained by integrating the plurality of kinds of diversity index values.

In the present technology, an integration index value obtained by integrating a plurality of kinds of diversity index values related to biodiversity is calculated on the basis of the plurality of kinds of diversity index values.

The information processing apparatus may be an independent apparatus or an internal block included in a single apparatus.

The program may be provided by being transmitted through a transmission medium or by being recorded in a recording medium.

### Brief Description of Drawings

[Fig. 1] Fig. 1 illustrates an example of a configuration of an embodiment of an information processing system to which the present technology is applied.
[Fig. 2] Fig. 2 illustrates an example of a hardware configuration of a terminal 11.
[Fig. 3] Fig. 3 illustrates an example of a hardware configuration of a server 12.
[Fig. 4] Fig. 4 is a diagram used to describe a first example of a use case of an information processing system 10.
[Fig. 5] Fig. 5 is a diagram used to describe a second example of the use case of the information processing system 10.
[Fig. 6] Fig. 6 is a block diagram illustrating an example of a functional configuration of the server 12.
[Fig. 7] Fig. 7 is a block diagram illustrating a first example of a configuration of a calculator 42.
[Fig. 8] Fig. 8 is a flowchart used to describe an example of processing performed by the server 12.
[Fig. 9] Fig. 9 is a diagram illustrating an example of a configuration of an individual index value calculator 51.
[Fig. 10] Fig. 10 is a diagram used to describe an α diversity, a β diversity, and a γ diversity.
[Fig. 11] Fig. 11 is a block diagram illustrating an example of a configuration of a β index value calculator 62.
[Fig. 12] Fig. 12 illustrates an example of a species list.
[Fig. 13] Fig. 13 is a diagram used to describe an example of a list pair table.
[Fig. 14] Fig. 14 is a block diagram illustrating an example of an inhabitation index value calculator.
[Fig. 15] Fig. 15 is a block diagram illustrating a second example of the configuration of the calculator 42.
[Fig. 16] Fig. 16 is a diagram used to describe an example of how a set list generator 91 generates a set list.
[Fig. 17] Fig. 17 is a block diagram illustrating a third example of the configuration of the calculator 42.
[Fig. 18] Fig. 18 is a diagram used to describe an example of how a fixed list is combined with a set list by a combining section 111.
[Fig. 19] Fig. 19 is a block diagram illustrating the third example of the configuration of the calculator 42.
[Fig. 20] Fig. 20 is a block diagram illustrating an example of a configuration of an individual index value calculator 121.
[Fig. 21] Fig. 21 illustrates an example of a species dominance list.
[Fig. 22] Fig. 22 illustrates an example of performing display on a presentation UI.
[Fig. 23] Fig. 23 illustrates an example of display performed on the presentation UI displaying thereon species in a set list indicated by a set list mark specified by a user.
[Fig. 24] Fig. 24 illustrates an example of display performed on the presentation UI displaying thereon species in a set list indicated by a set list mark specified by the user.

### Mode(s) for Carrying Out the Invention

### <Embodiment of Information Processing System to Which Present Technology is Applied>

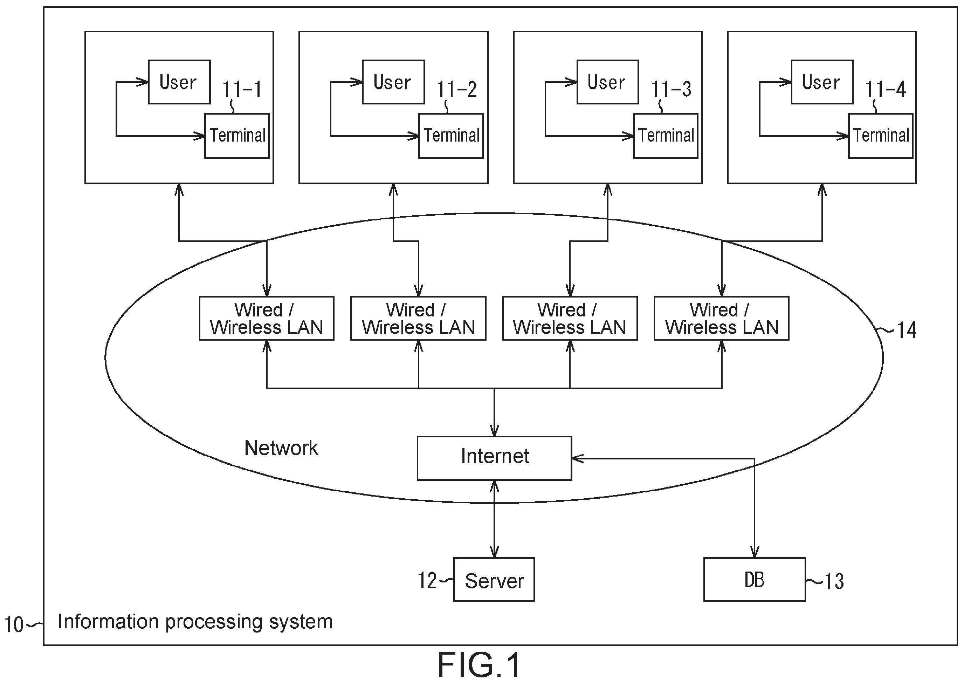

Fig. 1 illustrates an example of a configuration of an embodiment of an information processing system to which the present technology is applied.

On the basis of a plurality of kinds of diversity index values related to biodiversity, an information processing system 10 calculates an integration index value obtained by integrating the plurality of kinds of diversity index values. For example, the information processing system 10 calculates, as an integration index value for a species list in which species are given, an integration index value used when the species in the species list inhabits a target place for which the integration index value is to be calculated. The information processing system 10 provides an integration index value to a user.

For example, farms (or cultivated lands in the farms) in which various kinds of farming such as Synecoculture (registered trademark) or Kyosei Nouhou (registered trademark) are executed, farms in which the various kinds of farming are planned to be executed, and any other places may be adopted as a target place.

The diversity index value is an index value related to biodiversity, and a value related to biodiversity in some way may be adopted as the diversity index value. Thus, examples of the diversity index value include not only index values directly indicating biodiversity but also index values related to biodiversity.

The index value directly indicating biodiversity refers to a value representing a degree of biodiversity, that is, a degree of species diversity, a degree of genetic diversity, and a degree of ecosystem diversity. Examples of the index value directly indicating biodiversity include the number of species in a target place, the number of genes in the target place, and the number of ecosystems in the target place.

The index value related to biodiversity refers to a value having some correlation with biodiversity or a value that may be affected by the biodiversity. Examples of the index value related to biodiversity include the number of interacting species corresponding to other species with which a species in a target place performs (inter-organism) interaction, and the number of interactions between the species and the interacting species. The examples of the index value related to biodiversity further include the number of useful plant species in the target place and an index value representing the functional diversity in the target place (the diversity of ecological functions such as pollinating specific plant species, and the diversity of physiological functions such as expressing specific compounds). Furthermore, the examples of the index value related to biodiversity also include index values that respectively represent a crop yield obtained in the target place, an amount of carbon dioxide fixation in the target place, and a strength of each ecosystem service provided in the target place (such as a degree of soundness of a water cycle). The strength of an ecosystem service refers to a degree to which the ecosystem service is provided (a degree to which the ecosystem service is enjoyed). Here, with respect to, for example, the fact that the productivity of, for example, yields is related to biodiversity, the following document discloses that the productivity has a correlation with biodiversity: Tilman, David, Forest Isbell, and Jane M. Cowles. "Biodiversity and ecosystem functioning." Annual review of ecology, evolution, and systematics 45 (2014): 471-493 (hereinafter also referred to as Document A). Document A discloses, in its Abstract, that "Species diversity is a major determinant of ecosystem productivity, stability, invasibility, and nutrient dynamics. Hundreds of studies spanning terrestrial, aquatic, and marine ecosystems show that high-diversity mixtures are approximately twice as productive as monocultures of the same species and that this difference increases through time."

The information processing system 10 includes at least one terminal 11-i, at least one server 12, and a database (DB) 13. The terminal 11-i, the server 12, and the DB 13 can communicate with each other through a network 14, where example of the network 14 include a wired local area network (LAN), a wireless LAN, the Internet, and a mobile communication network of, for example, 5G.

In Fig. 1, four terminals 11-1, 11-2, 11-3, and 11-4 are provided as the terminals 11-i. However, one of other numbers such as one to three and five or more may be adopted as the number of terminals 11-i. The terminals 11-1 to 11-4 are hereinafter referred to as terminals 11 when there is no particular need to distinguish between the terminals 11-1 to 11-4.

Further, in Fig. 1, one server 12 is provided as the server 12. However, a plurality of servers 12 may be provided. When the plurality of servers 12 is provided, the plurality of servers 12 may be caused to perform processes described below in a distributed manner. Furthermore, each of the plurality of servers 12 may be assigned to the terminal 11 that the server 12 takes in charge of, and the server 12 may be caused to only perform a process for the terminal 11 that the server 12 takes in charge of.

Furthermore, in the information processing system 10, the terminal 11 may be caused to perform a portion of or all of the processes to be performed by the server 12. When the terminal 11 is caused to perform all of the processes to be performed by the server 12, the information processing system 10 may be configured without being provided with the server 12.

The terminal 11 is, for example, a personal computer (PC), and is operated by a user. Moreover, the terminal 11 may be, for example, a mobile terminal (a device) such as a smartphone or smart glasses.

A user can input necessary information by operating the terminal 11. For example, the user can input (for example, names (species names) of) species by operating the terminal 11, where examples of the species include plant species, animal species, and microbial species that inhabit (grow in) a target place or that are (planned to be) introduced into the target place. Moreover, the user can input other information by operating the terminal 11, where the other information is information necessary for a process to be performed by the terminal 11 or the server 12. Note that a species can be input not only by inputting, for example, a name of the species, but also by capturing an image of the species using the terminal 11. When the species is input by capturing an image of the species using the terminal 11, the species appearing in the image is recognized (the species is identified) by the image obtained by the image-capturing being recognized by, for example, the terminal 11 or the server 12.

The terminal 11 transmits a species list and other necessary information to the server 12 (through the network 14), where (for example, a name of) a species input according to an operation performed by a user is in the species list. For example, the terminal 11 generates, for example, at least one species list for a target place according to an operation performed by the user, and transmits the at least one species list to the server 12.

The terminal 11 receives, for example, an image that serves as a presentation user interface (UI) that presents thereon, for example, an integration index value used when a species in a species list (a species of which a name is in a species list) inhabits a target place. For example, the terminal 11 displays the presentation UI (or performs output using sound) to present, for example, an integration index value to a user.

On the basis of a plurality of kinds of diversity index values used when a species in a species list inhabits a target place, the server 12 calculates an integration index value obtained by integrating the plurality of kinds of diversity index values.

For example, the server 12 receives, for example, a species list transmitted by the terminal 11 (through the network 14). Using, for example, the species list, the server 12 calculates a plurality of kinds of diversity index values used when a species in a species list inhabits a target place, and calculates an integration index value on the basis of the plurality of kinds of diversity index values. The server 12 generates a presentation UI that presents thereon, for example, an integration index value, and transmits the integration index value to the terminal 11 (through the network 14).

The server 12 refers to the DB 13 (through the network 14) as necessary and uses information stored in the DB 13 to perform processing.

### <Examples of Hardware Configurations of Terminal 11 and Server 12>

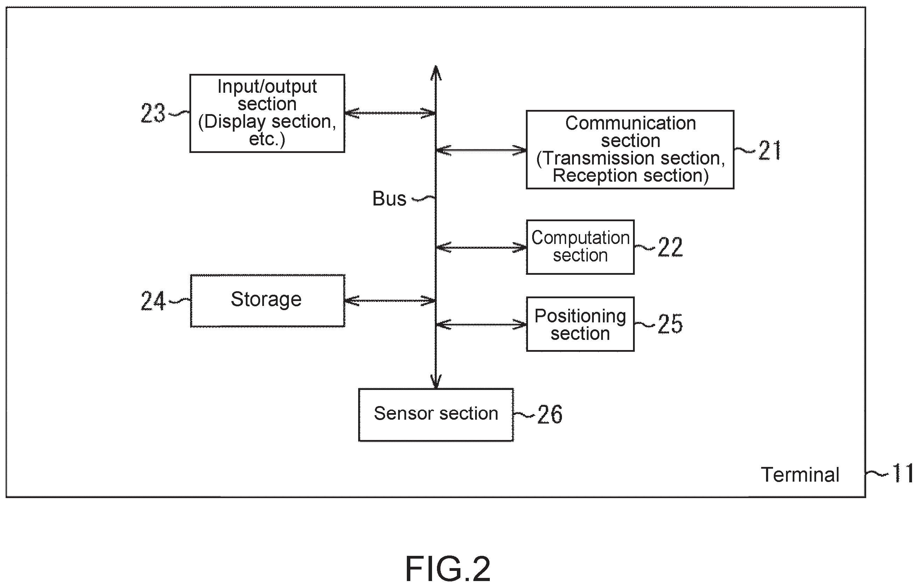

Fig. 2 illustrates an example of a hardware configuration of the terminal 11.

The terminal 11 includes a communication section 21, a computation section 22, an input/output section 23, a storage 24, a positioning section 25, and a sensor section 26. The structural elements from the communication section 21 to the sensor section 26 are connected to each other through a bus, and can communicate information to each other.

The communication section 21 serves as a transmitter that transmits information through the network 14, and a receiver that receives information through the network 14.

The computation section 22 includes a processor such as a central processing unit (CPU) or a digital signal processor (DSP), and performs various processes by executing a program recorded in the storage 24.

The input/output section 23 includes, for example, a keyboard, a touchscreen, and a microphone, and receives operation performed by a user and various kinds of input. Further, the input/output section 23 includes a speaker and a display (a display section), and presents information to the user by, for example, outputting sound or displaying an image.

The storage 24 includes a semiconductor memory such as a random access memory (RAM) or a nonvolatile memory, a solid state drive (SSD), and a hard disk drive (HDD). The storage 24 records (stores) therein, for example, a program executed by the computation section 22, and data necessary for processing to be performed by the computation section.

The program executed by the computation section 22 may be installed on a computer serving as the terminal 11 from a removable recording medium such as a digital versatile disc (DVD) or a memory card. Further, the program may be downloaded into a computer serving as the terminal 11 through, for example, the network 14 to be installed on the storage 24.

The positioning section 25 is included in, for example, the Global Positioning System (GPS). The positioning section 25 measures a position of the terminal 11 (position measurement), and outputs position information, such as latitude and longitude (and necessary altitude), that indicates the position.

The sensor section 26 includes a camera and various sensors such as a ranging sensor, a temperature sensor, and a humidity sensor. For example, the sensor section 26 performs various kinds of sensing such as performing image-capturing, detecting a distance, detecting a temperature, and detecting humidity, and outputs sensing results such as an image, a distance, a temperature, and humidity.

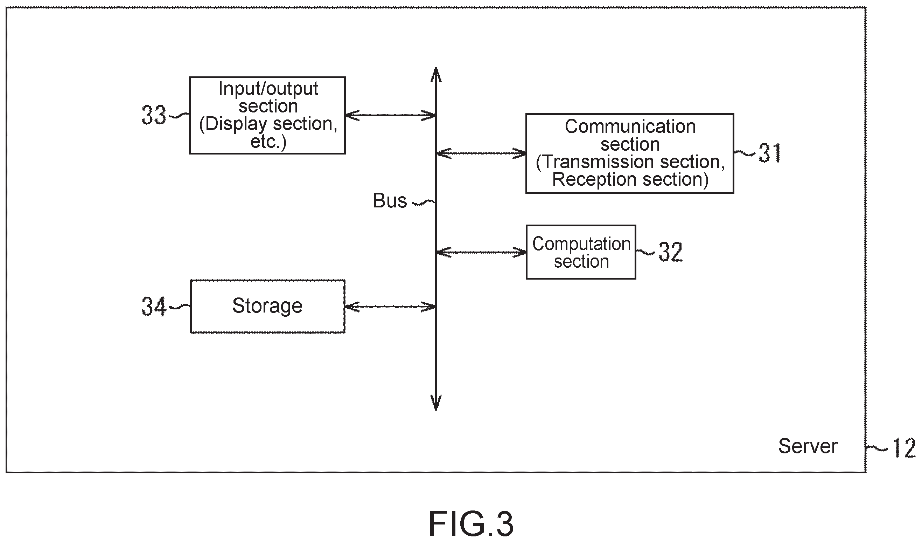

Fig. 3 illustrates an example of a hardware configuration of the server 12.

The server 12 include a communication section 31, a computation section 32, an input/output section 33, and a storage 34. The structural elements from the communication section 31 to the storage 34 respectively have configurations similar to the configurations of the structural elements from the communication section 21 to the storage 24 in Fig. 2. Thus, the descriptions thereof are omitted. Note that the structural elements from the communication section 31 to the storage 34 may be structural elements exhibiting a higher performance with respect to the capacity, a processing speed, and others, compared to the structural elements from the communication section 21 to the storage 24.

### <Use Case of Information Processing System 10>

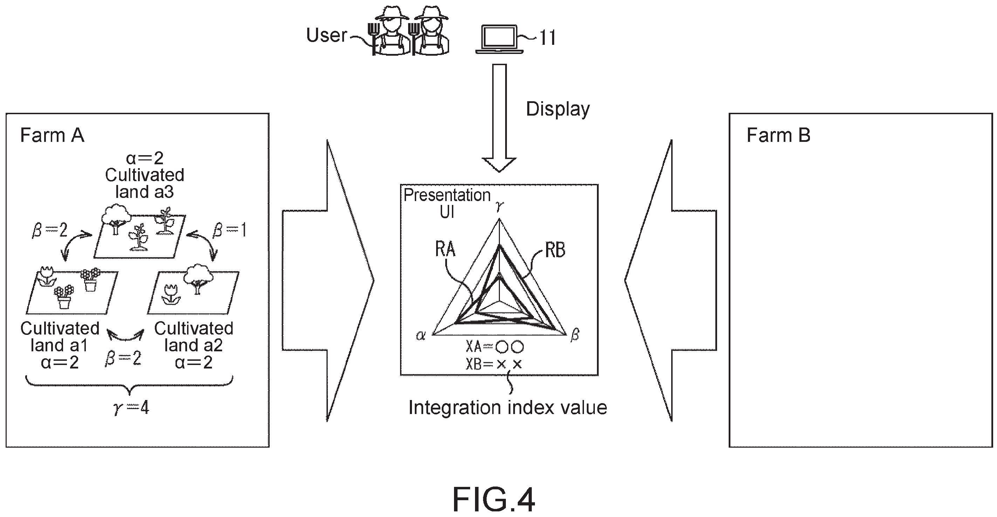

Fig. 4 is a diagram used to describe a first example of a use case of the information processing system 10.

When a user operates the terminal 11 in the information processing system 10, the user can input species, such as plant species, animal species, and microbial species, that inhabit a target place, and can input the species to be introduced into the target place. The terminal 11 generates a species list in which species input according to an operation performed by the user are given, and transmits the species list to the server 12.

Note that various insects, microorganisms, birds, and other organisms may inhabit the target place. However, it is not realistic to find all of the species currently inhabiting the target place. Thus, when a user inputs a species that inhabits a target place, the species to be input may be restricted to species meeting a specified condition, such as only plant species, only insect species, or species that can be observed for a specified period of time.

The server 12 calculates a plurality of kinds of diversity index values used when a species in a species list transmitted by the terminal 11 inhabits a target place. Further, the server 12 calculates an integration index value on the basis of the plurality of kinds of diversity index values, and generates a presentation UI that presents thereon, for example, the integration index value.

The server 12 transmits the presentation UI to the terminal 11, and the terminal 11 presents, for example, the integration index value to a user by displaying thereon the presentation UI transmitted by the server 12. Using the integration index value, the user can evaluate, from the viewpoint of biodiversity, an ecosystem, in a target place, that is applied when a species in a species list inhabits in the target place.

For example, the information processing system 10 can be used to evaluate a current ecosystem in a certain place, to compare a plurality of ecosystems from the perspective of biodiversity, and to plan a combination of species introduced into an ecosystem in order to increase biodiversity.

Note that, upon comparing a plurality of ecosystems from the perspective of biodiversity, comparison of ecosystems at different points in time in the same place is performed, to say nothing of comparison of ecosystems in different places. For example, when the farming is changed to Synecoculture (registered trademark) or Kyosei Nouhou (registered trademark) in a place in which the existing farming is executed, an ecosystem when the existing farming is executed and an ecosystem after Synecoculture (registered trademark) or Kyosei Nouhou (registered trademark) is executed can be compared with each other.

Fig. 4 illustrates an example of evaluating ecosystems in farms A and B that are different places.

A user observes species, such as plant species, that inhabit the respective farms A and B set to be target places, and operates the terminal 11 to input the observed plant species.

In this case, the server 12 calculates a plurality of kinds of diversity index values for each of the farms A and B using the plant species observed by the user, and calculates an integration index value for each of the farms A and B on the basis of the plurality of kinds of diversity index values. Further, the server 12 generates a presentation UI that presents thereon, for example, an integration index value, and transmits the presentation UI to the terminal 11.

In Fig. 4, the farm A has three cultivated lands a1, a2, and a3. Then, index values for an α diversity, a β diversity, and a γ diversity in the farm A set to be a target place are calculated as the plurality of kinds of diversity index values, with one cultivated land being set to be one biotic community. Likewise, index values for the α diversity, the β diversity, and the γ diversity in the farm B are calculated as the plurality of kinds of diversity index values. The α diversity, the β diversity, and the γ diversity will be described later.

The terminal 11 displays thereon the presentation UI transmitted by the server 12. The user can evaluate ecosystems in the respective the farms A and B and compare the ecosystems in the farms A and B by viewing, for example, the displayed integration index values displayed on the presentation UI.

In Fig. 4, integration index values XA and XB for the respective farms A and B are displayed on the presentation UI. Further, a radar chart RA of the index values for the α diversity, the β diversity, and the γ diversity for the farm A that are used to calculate the integration index value XA is also displayed. Furthermore, a radar chart RB of the index values for the α diversity, the β diversity, and the γ diversity for the farm B that are used to calculate the integration index value XB is also displayed.

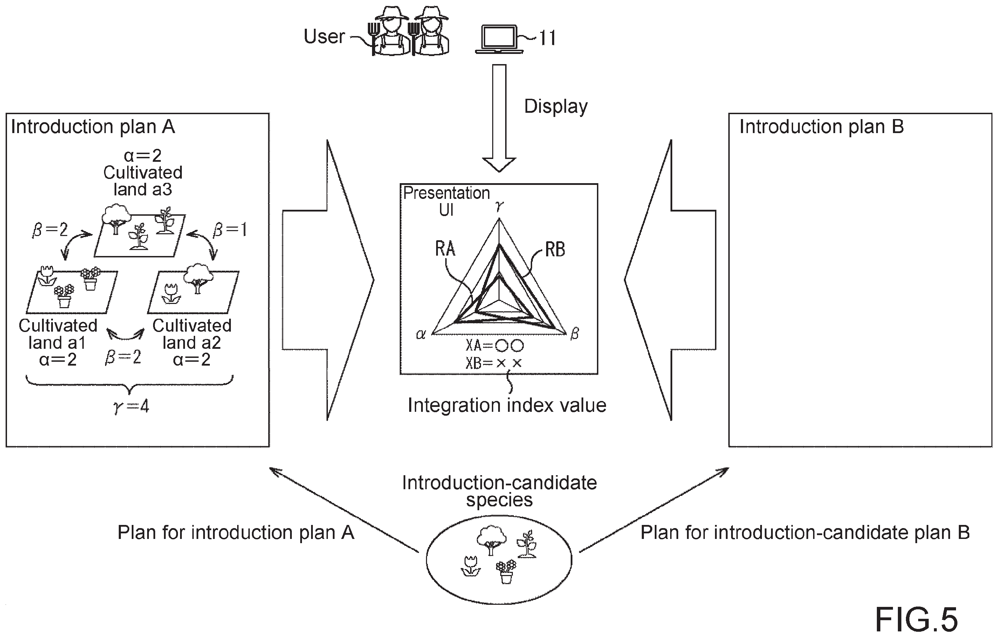

Fig. 5 is a diagram used to describe a second example of the use case of the information processing system 10.

Fig. 5 illustrates an example of planning a combination of species introduced into a certain place set to be a target place.

A user determines a plurality of species as introduction-candidate species that are candidates for species to be introduced into a target place. For example, the user may determine, as introduction-candidate species, plant species, insect species, and soil microbial species that are desired by the user to be introduced into the target place.

The user selects at least one combination of species from the introduction-candidate species to plan the combination as an introduction plan to be introduced into a target place. In Fig. 5, introduction plans A and B are planned.

The user operates the terminal 11 to input (a combination of) species corresponding to each of the introduction plans A and B.

In this case, the server 12 calculates a plurality of kinds of diversity index values used when species in combination that correspond to each of the introduction plans A and B inhabit a target place, and calculates an integration index value on the basis of the plurality of kinds of diversity index values. Further, the server 12 generates a presentation UI that presents thereon, for example, an integration index value, and transmits the integration index value to the terminal 11.

In Fig. 5, the target place has three cultivated lands a1, a2, and a3, as in the case of the farm A in Fig. 4. Then, index values for the α diversity, the β diversity, and the γ diversity in the target place are calculated as the plurality of kinds of diversity index values, with one cultivated land being set to be one biotic community. Likewise, index values for the α diversity, the β diversity, and the γ diversity in a target place are calculated for the introduction plan B as the plurality of kinds of diversity index values.

The terminal 11 displays thereon the presentation UI transmitted by the server 12. By viewing, for example, the displayed integration index value displayed on the presentation UI, the user can evaluate ecosystems in respective target places of the introduction plans A and B when combinations of species that correspond to the introduction plans A and B are introduced into the respective target places. Further, the user can compare the ecosystems in the respective target places of the introduction plans A and B when the combinations of species that correspond to the respective introduction plans A and B are introduced into the respective target places. Furthermore, the comparison makes it possible to perform selection from the introduction plans A and B to determine an introduction plan that increases the biodiversity (that makes it possible to design an ecosystem exhibiting a high degree of biodiversity).

In Fig. 5, integration index values XA and XB for the respective introduction plans A and B (integration index values for target places that are used when the introduction plans A and B are introduced into the respective target places) are displayed on the presentation UI. Further, a radar chart RA of the index values for the α diversity, the β diversity, and the γ diversity for the introduction plan A that are used to calculate the integration index value XA is also displayed. Furthermore, a radar chart RB of the index values for the α diversity, the β diversity, and the γ diversity for the introduction plan B that are used to calculate the integration index value XB is also displayed.

The use of an integration index value obtained by integrating a plurality of kinds of diversity index values makes it possible to evaluate an ecosystem from various perspectives on biodiversity, and thus to evaluate the ecosystem properly.

For example, the inventors have confirmed that the index value for the α diversity and the index value for the β diversity tend to exhibit a trade-off relationship. Thus, in some cases, one of the index values for the α diversity and the β diversity is not favorable when another of the index values for the α diversity and the β diversity is favorable. Therefore, when an ecosystem is evaluated only using one of the index values for the α diversity and the β diversity, the ecosystem may be evaluated improperly.

On the other hand, for example, when an ecosystem is evaluated on the basis of an integration index value calculated on the basis of a plurality of kinds of diversity index values that include the index values for the α diversity and the β diversity, an ecosystem for which both of the index values for the α diversity and the β diversity are favorable can be evaluated properly as an ecosystem exhibiting a high degree of biodiversity.

### <Example of Functional Configuration of Server 12>

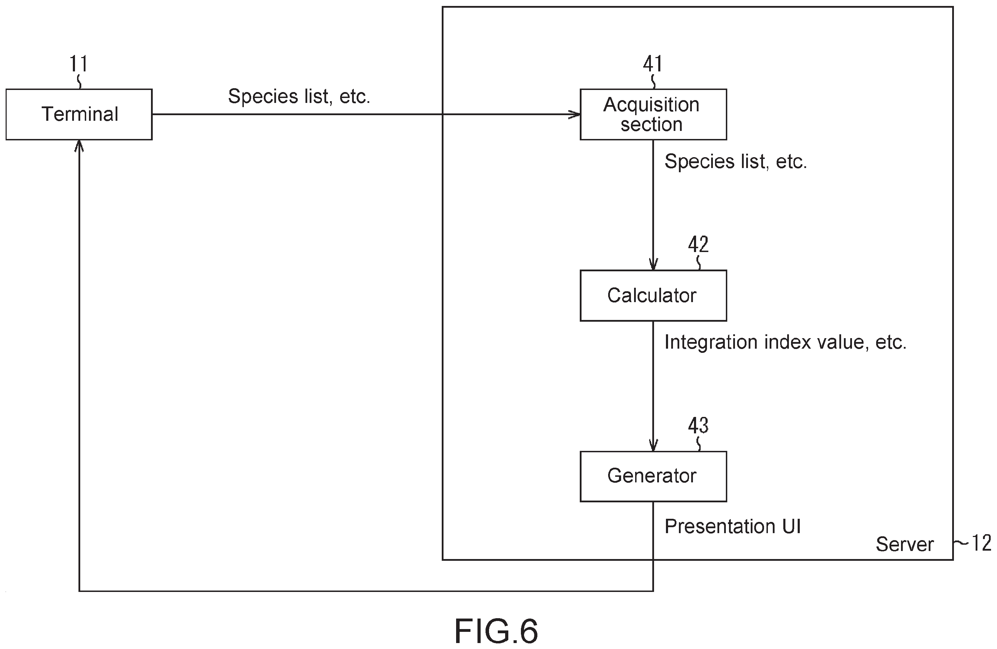

Fig. 6 is a block diagram illustrating an example of a functional configuration of the server 12.

The functional configuration of the server 12 is provided by the computation section 32 illustrated in Fig. 3 executing a program.

In Fig. 6, the server 12 includes an acquisition section 41, a calculator 42, and a generator 43.

The acquisition section 41 receives to acquire various information, such as at least one species list for a target place, that is transmitted by the terminal 11.

The acquisition section 41 supplies the acquired information to a block requiring the acquired information. For example, the acquisition section 41 supplies the species list to the calculator 42.

On the basis of a plurality of kinds of diversity index values used when a species in a species list from the acquisition section 41 inhabits a target place, the server 12 calculates an integration index value obtained by integrating the plurality of kinds of diversity index values, using, for example, the species list, and the server 12 supplies the integration index value to the generator 43. The calculator 42 can supply the generator 43 with information other than the integration index value, where examples of the information other than the integration index value include diversity index values used to calculate the integration index value, a species list from the acquisition section 41, and other necessary information that can be used to perform display on the presentation UI.

The calculator 42 calculates a plurality of kinds of diversity index values used when a species in a species list inhabits a target place. Each of the plurality of kinds of diversity index values is also referred to as an individual index value. By integrating a plurality of kinds of individual index values corresponding to the plurality of kinds of diversity index values, the calculator 42 calculates an integration index value obtained by integrating the plurality of kinds of individual index values. In other words, on the basis of a plurality of kinds of individual index values corresponding to a plurality of kinds of diversity index values, the calculator 42 calculates an integration index value obtained by integrating the plurality of kinds of individual index values.

Here, it is assumed that the individual index value and the integration index value are index values that are larger with a higher degree of biodiversity. Note that an index value that is smaller with a higher degree of biodiversity may be adopted as the individual index value. The same applies to the integration index value.

A method for obtaining one value from a plurality of kinds of individual index values is adopted as an integration method for integrating the plurality of kinds of individual index values, where examples of the method for obtaining one value from a plurality of kinds of individual index values include a function (a computation) to output one scalar value using, for example, a plurality of kinds of individual index values as arguments. In particular, for example, an integration method by which a large integration index value (or a small integration index value) is obtained when there are a lot of large individual index values and by which a small integration index value (or a large integration index value) is obtained when there are a lot of small individual index values may be adopted. For example, multiplication or addition may be adopted as the integration method. In other words, for example, a multiplication value obtained by multiplying a plurality of kinds of individual index values, or an average of the plurality of kinds of individual index values may be adopted as the integration index value. When the multiplication value obtained by multiplying a plurality of kinds of individual index values (or a value similar to the multiplication value) is adopted as an integration index value, the integration index value may be considered an index value that represents a balance of the plurality of kinds of individual index values. In other words, an integration index value that is a multiplication value obtained by multiplying a plurality of kinds of individual index values becomes large excessively when all of the plurality of kinds of individual index values are large, but does not become large excessively when even a single kinds of individual index value is small. Thus, an integration index value that is a multiplication value obtained by multiplying a plurality of kinds of individual index values may be considered an index value that becomes larger when a plurality of kinds of individual index values becomes larger in a well-balanced manner.

The generator 43 generates a presentation UI that presents thereon, for example, an integration index value transmitted by the calculator 42, and transmits the integration index value to the terminal 11.

### <First Example of Configuration of Calculator 42>

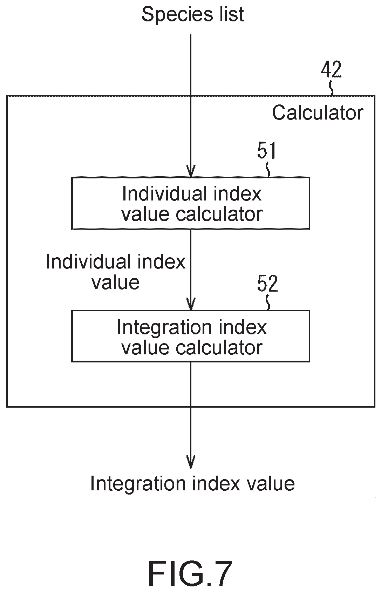

Fig. 7 is a block diagram illustrating a first example of a configuration of the calculator 42 illustrated in Fig. 6.

In Fig. 7, the calculator 42 includes an individual index value calculator 51 and an integration index value calculator 52.

The individual index value calculator 51 is supplied with at least one species list for a target place from the acquisition section 41 (Fig. 6). Using the species list from the acquisition section 41, the individual index value calculator 51 calculates a plurality of kinds of individual index values corresponding to a plurality of kinds of diversity index values used when a species in the species list inhabits a target place, and supplies the integration index value calculator 52 with the plurality of kinds of individual index values.

On the basis of the plurality of kinds of individual index values from the individual index value calculator 51, the integration index value calculator 52 calculates an integration index value, and supplies the integration index value to the generator 43 (Fig. 6).

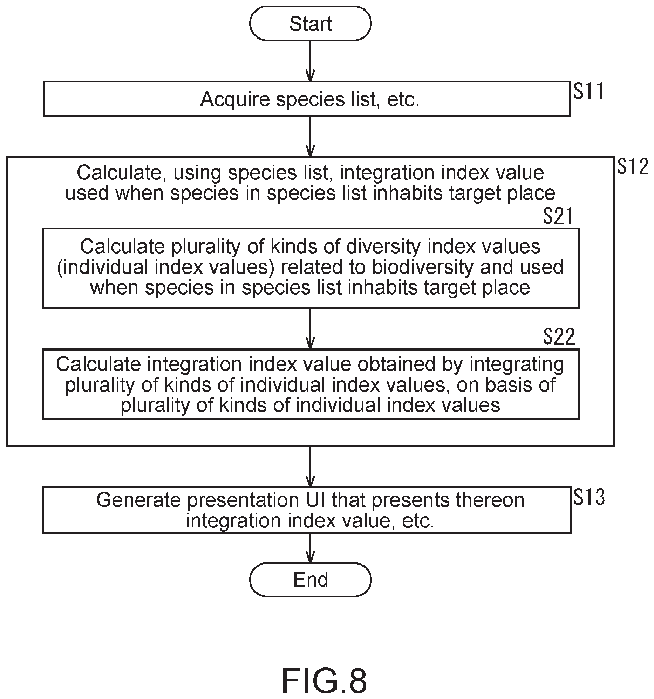

Fig. 8 is a flowchart used to describe an example of processing performed by the server 12 illustrated in Fig. 6.

In Step S11, the acquisition section 41 of the server 12 acquires, for example, a species list transmitted by the terminal 11, and supplies the species list to the calculator 42. Then, the process moves on to Step S12.

In Step S12, using, for example, the species list from the acquisition section 41, the calculator 42 calculates an integration index value used when a species in the species list inhabits a target place.

In Step S12, first, the individual index value calculator 51 of the calculator 42 (Fig. 7) calculates, in Step S21, a plurality of kinds of individual index values corresponding to a plurality of kinds of diversity index values used when a species in the species list from the acquisition section 41 inhabits a target place. The individual index value calculator 51 supplies the integration index value calculator 52 with the plurality of kinds of individual index values, and the process moves on to Step S22 from Step S21.

In Step S22, the integration index value calculates calculator 52 calculates an integration index value obtained by integrating a plurality of kinds of individual index values, on the basis of the plurality of kinds of individual index values from the individual index value calculator 51.

The calculator 42 supplies the generator 43 with the integration index value calculated in Step S12, as described above, and the process moves on to Step S13.

In Step S13, the generator 43 generates a presentation UI that presents thereon, for example, the integration index value from the calculator 42, and transmits the integration index value to the terminal 11.

### <Example of Configuration of Individual Index Value Calculator 51>

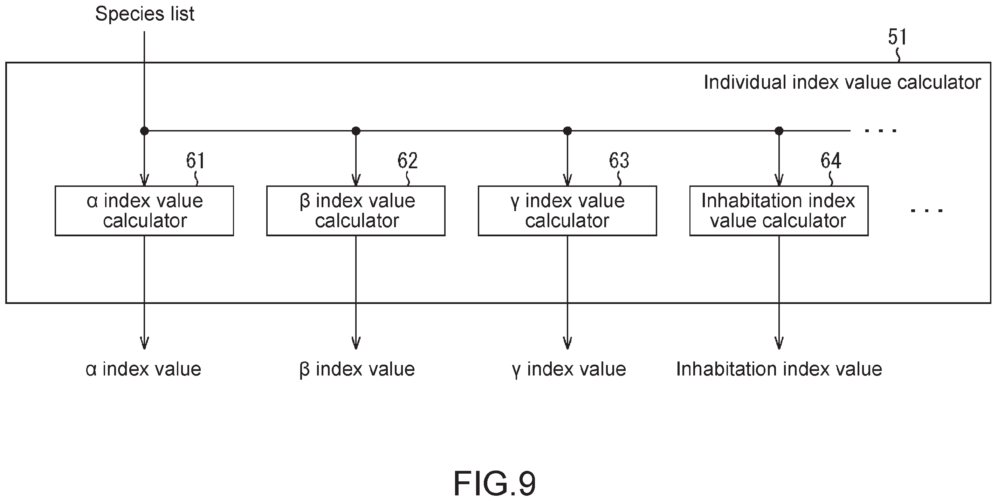

Fig. 9 is a block diagram illustrating an example of a configuration of the individual index value calculator 51 illustrated in Fig. 7.

The individual index value calculator 51 includes a plurality of calculators respectively calculating various kinds of individual index values. For example, the individual index value calculator 51 includes, for example, an α index value calculator 61, a β index value calculator 62, a γ index value calculator 63, and an inhabitation index value calculator 64.

Calculators, such as the α index value calculator 61 to the inhabitation index value calculator 64, that are included in the individual index value calculator 51 are supplied with at least one species list for a target place that is provided by the acquisition section 41 (Fig. 6).

The α index value calculator 61 calculates an α index value that is one kind of diversity index value that represents an α diversity and that is used when a species in the species list from the acquisition section 41 is observed in a target place, and supplies the integration index value calculator 52 (Fig. 7) with the α index value as one kind of individual index value.

The β index value calculator 62 calculates a β index value that is one kind of diversity index value that represents a β diversity and that is used when a species in the species list from the acquisition section 41 is observed in the target place, and supplies the integration index value calculator 52 with the β index value as one kind of individual index value.

The γ index value calculator 63 calculates a γ index value that is one kind of diversity index value that represents a γ diversity and that is used when a species in the species list from the acquisition section 41 is observed in the target place, and supplies the integration index value calculator 52 with the γ index value as one kind of individual index value.

The inhabitation index value calculator 64 calculates a diversity index value (hereinafter also referred to as an inhabitation index value) that is one kind of diversity index value that is based on the inhabitation possibility and used when a species in the species list from the acquisition section 41 is observed in the target place. The inhabitation index value calculator 64 supplies the integration index value calculator 52 with the diversity index value as one kind of individual index value. The inhabitation possibility and the inhabitation index value will be described later.

The individual index value calculated by the individual index value calculator 51 is not limited to the α index value, the β index value, the γ index value, and the inhabitation index value. The individual index value calculator 51 may calculate any individual index values of a plurality of kinds of individual index values.

In other words, for example, the individual index value calculator 51 may only calculate two or three kinds of individual index values, instead of calculating all of the four kinds of individual index values that are the α index value, the β index value, the γ index value, and the inhabitation index value. Further, for example, the individual index value calculator 51 may calculate a different kind of individual index value other than the α index value, the β index value, the γ index value, and the inhabitation index value.

Examples of the different kind of individual index include the above-described number of interacting species, the above-described number of interactions with the interacting species, the above-described number of useful plant species (one of index values representing a diversity of useful plants), the above-described index values respectively representing a functional diversity, a crop yield, an amount of carbon dioxide fixation, and a strength of each ecosystem service.

The kind of individual index value calculated by the individual index value calculator 51, that is, the kind of individual index value used to calculate an integration index value may be set by, for example, the server 12 or may be set according to an operation performed by a user on the terminal 11.

Note that the individual index value may be an index value also related to ecosystem characteristics other than the biodiversity, as long as the individual index value is a diversity index value, that is, an index value related to biodiversity. For example, with respect to the functions of organisms, there are closely related species having different functions and there are distantly related species having the same function or similar functions. Thus, an index value representing the functional diversity is also an index value representing functional characteristics of the biotic community.

Further, examples of a plurality of kinds of individual index values calculated by the individual index value calculator 51 may include individual index values, such as the α index value and the β index value, that tend to exhibit a trade-off relationship.

### <α Diversity, β Diversity, and γ Diversity>

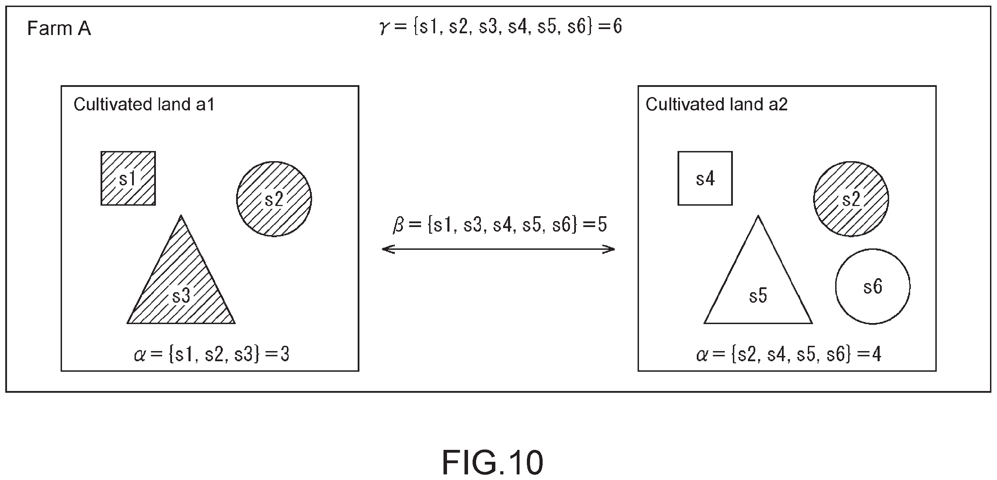

Fig. 10 is a diagram used to describe the α diversity, the β diversity, and the γ diversity.

In Fig. 10, the farm A set to be a target place has the two cultivated lands a1 and a2. Species s1, s2, and s3 inhabit the cultivated land a1, and species s2, s4, s5, and s6 inhabit the cultivated land a2.

The α diversity corresponds to the richness of species in a cultivated land that is a biotic community in a target place. For example, the number of species in the cultivated land may be adopted as an α index value that represents such an α diversity. Further, when, for example, the population size of each species in the cultivated land is known, the α index value such as the Shannon-Wiener Diversity Index (Shannon Index) with which the number of species in the cultivated land is counted on the basis of weights corresponding to the population sizes of the respective species, may be adopted.

When, for example, the number of species is adopted as the α index value, an α index value for the cultivated land a1 in Fig. 10 is three, which is the number of species s1, s2, and s3, and an α index value for the cultivated land a2 in Fig. 10 is four, which is the number of species s2, s4, s5, and s6. For example, a value, such as an average, that is obtained by integrating the α index values for the cultivated lands a1 and a2 of the farm A may be adopted as an α index value for the farm A corresponding to a target place.

The β diversity corresponds to the richness of a kind of unique species only inhabiting one of two cultivated lands in combination (hereinafter also referred to as a cultivated-land pair), where the two cultivated lands are any two of cultivated lands that are biotic communities in a target place. For example, the number of species not common to the two cultivated lands corresponding to the cultivated-land pair, or the Jaccard coefficient, which indicates a degree of similarity between a combination of species inhabiting one of the two cultivated lands corresponding to the cultivated-land pair and a combination of species inhabiting another of the two cultivated lands corresponding to the cultivated-land pair, may be adopted as a β index value that represents such a β diversity.

When, for example, the number of species not common to the two cultivated lands corresponding to the cultivated-land pair is adopted as the β index value, a β index value for a combination of the cultivated lands a1 and a2 corresponding to a cultivated-land pair in Fig. 10 is five, which is the number of species including the species s1 and s2 only inhabiting the cultivated land a1, and the species s4, S5, and s6 only inhabiting the cultivated land a2. For example, a value, such as an average, that is obtained by integrating the β index values for all of the cultivated-land pairs that could be formed using the cultivated lands in the farm A, may be adopted as a β index value for the farm A corresponding to a target place.

The γ diversity corresponds to the richness of species in the entirety of a target place. For example, a value similar to the value for the α diversity may be adopted as a γ index value that represents such a γ diversity.

When, for example, the number of species is adopted as the γ diversity, a γ index value for the farm A corresponding to a target place in Fig. 10 is six, which is the number of species s1, s2, s3, s4, s5, and s6.

Here, calculators for the respective individual index values in the individual index value calculator 51 illustrated in Fig. 9 that are, for example, from the index value calculator 61 to the inhabitation index value calculator 64 may respectively calculate the α index value, the β index value, the γ index value, and the inhabitation index value, considering that, for example, species in a species list for a target place that is transmitted by the terminal 11 are species that inhabit a cultivated land that is a biotic community in the target place.

In this case, the α index value, the γ index, and the inhabitation index from among the α index value, the β index value, the γ index value, and the inhabitation index value can be calculated both when one species list for the target place is transmitted by the terminal 11 or when a plurality of species lists for the target place is transmitted by the terminal 11. There is a need for a cultivated-land pair to calculate the β index value. Thus, the β index value can be calculated when a plurality of species lists for the target place is transmitted by the terminal 11. Therefore, the β index value is not calculated when one species list for the target place is transmitted by the terminal 11.

Note that the α diversity, the β diversity, and the γ diversity is disclosed in, for example, Monleon-Getino, Toni, Clara I. Rodriguez-Casado, and Pablo Emilio Verde. "Shannon entropy ratio, a bayesian biodiversity index used in the uncertainty mixtures of metagenomic populations." J Adv Stat 4.4 (2019): 23-49.

### <Example of Configuration of β Index Value Calculator 62>

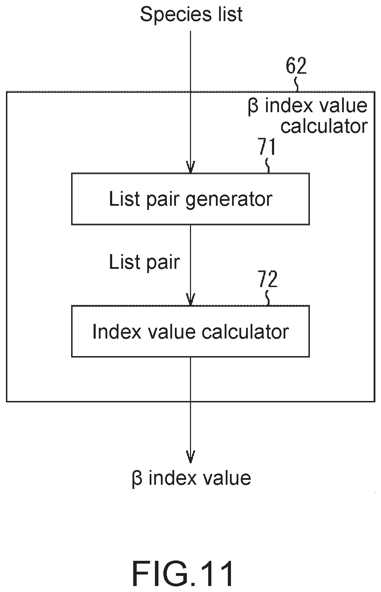

Fig. 11 is a block diagram illustrating an example of a configuration of the β index value calculator 62 illustrated in Fig. 9.

In Fig. 11, the β index value calculator 62 includes a list pair generator 71 and an index value calculator 72.

The list pair generator 71 is supplied with at least one species list for a target place by the acquisition section 41 (Fig. 6). When the list pair generator 71 is supplied with one species list for the target place, the β index value calculator 62 does not perform subsequent processes, and thus does not calculate the β index value.

When the list pair generator 71 is supplied with a plurality of species lists for the target place, the list pair generator 71 generates all of combinations of two of the plurality of species lists (hereinafter also referred to as list pairs). The list pair generator 71 supplies the index value calculator 72 with (information regarding) the list pairs.

The index value calculator 72 calculates a β index value for each list pair (each cultivated-land pair) on the assumption that species in two of the species lists supplied by the list pair generator 71 that correspond to the list pair are species respectively inhabiting two cultivated lands that correspond to a cultivated-land pair.

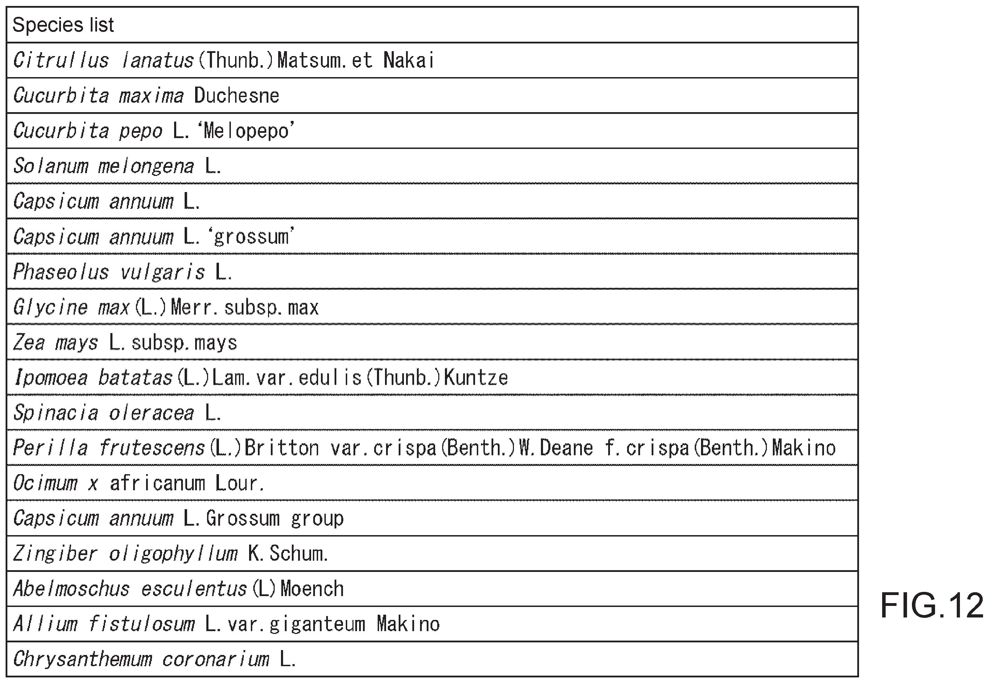

Fig. 12 illustrates an example of a species list.

The species list includes a species name that is, for example, a scientific name. A list ID (identification information) used to identify the species list may be assigned to the species list.

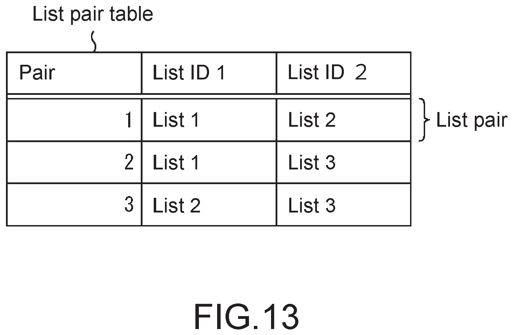

Fig. 13 is a diagram used to describe an example of a list pair table.

The list pair generator 71 generates all of combinations of list IDS of two of a plurality of species lists supplied by the acquisition section 41, and generates a list pair table in which the combinations are given. The list pair generator 71 supplies the index value calculator 72 (Fig. 11) with the list pair table as information regarding a list pair.

From among the combinations of list IDs in the list pair table from the list pair generator 71, the index value calculator 72 specifies two species lists corresponding to a list pair, and calculates a β index for the list pair.

Fig. 13 is a list pair table in which three species lists from the acquisition section 41 (the terminal 11) are given. In the list pair table, a list ID 1 is one of list IDs of two species lists corresponding to a list pair, and a list ID 2 is another of the list IDs.

### <Example of Configuration of Inhabitation Index Value Calculator 64>

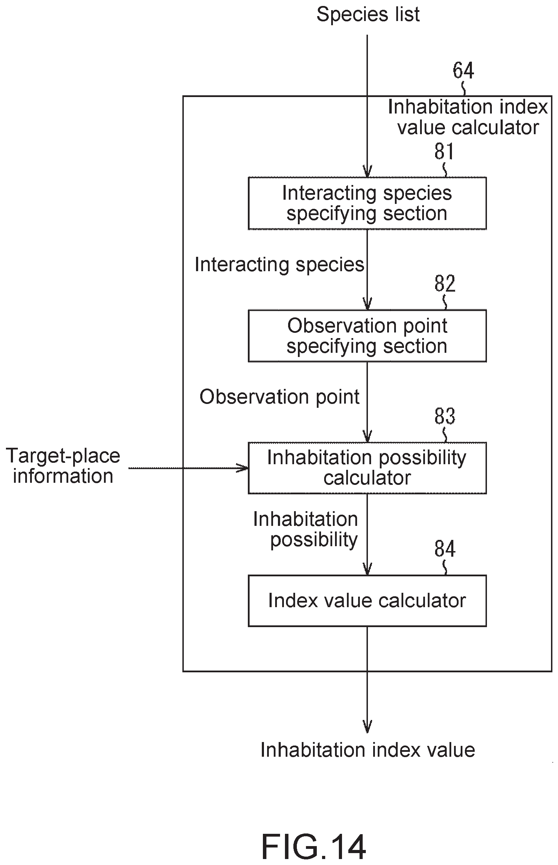

Fig. 14 is a block diagram illustrating an example of a configuration of the inhabitation index value calculator 64 illustrated in Fig. 9.

The inhabitation index value calculator 64 calculates a diversity index value used when a species in a species list from the acquisition section 41 (Fig. 6) is observed in a target place, on the basis of the inhabitation possibility indicating the possibility that an interacting species interacting with the species in the species list inhabits the target place. The diversity index value calculated on the basis of the inhabitation possibility, as described above, is an inhabitation index value.

In Fig. 14, the inhabitation index value calculator 64 includes an interacting species specifying section 81, an observation point specifying section 82, an inhabitation possibility calculator 83, and an index value calculator 84.

The interacting species specifying section 81 is supplied with a species list provided by the acquisition section 41 (Fig. 6). The interacting species specifying section 81 refers to the DB 13 to specify an interacting species that interacts with each species in the species list, and supplies (for example, a name of) the interacting species to the observation point specifying section 82. Here, the DB 13 stores therein interaction information in which (for example, a name of) each species, (for example, a name of) an interacting species that is another species that interacts with the species, and (for examples a name of) the interaction are associated with each other.

The observation point specifying section 82 refers to the DB 13 to specify (position information regarding) an observation point at which each interacting species supplied by the interacting species specifying section 81 is observed, and supplies the observation point to the inhabitation possibility calculator 83. Here, the DB 13 stores therein observation-point information in which each species and (position information regarding) an observation point at which (the inhabitation of) the species is observed are associated with each other. The number of observation points for a species is not limited to one.

The inhabitation possibility calculator 83 is supplied with target-place information in addition to being supplied an observation point for each interacting species by the observation point specifying section 82. The target-place information is position information regarding a target place, and is transmitted from the terminal 11 to the server 12 according to an operation performed by a user. The target-place information transmitted by the terminal 11 is acquired by the acquisition section 41, and is supplied to the inhabitation possibility calculator 83.

The inhabitation possibility calculator 83 refers to the DB 13 as necessary, calculates the inhabitation possibility of each interacting species inhabiting a target place, using the observation point for each interacting species from the observation point specifying section 82 and the target-place information from the acquisition section 41, and supplies the inhabitation possibility to the index value calculator 84. The inhabitation possibility is information indicating the possibility of a certain species inhabiting a certain point. For example, the probability (the existence probability) that a certain species inhabits (exists at) a certain point, or a value that represents the sureness (the likelihood) of a certain species existing at a certain point may be adopted as the inhabitation possibility.

The index value calculator 84 calculates an inhabitation index value for a target place on the basis of the inhabitation possibility of each interacting species from the inhabitation possibility calculator 83, and supplies the inhabitation index value to the generator 43 (Fig. 6).

For example, the inhabitation possibility calculator 83 may calculate a probability distribution of the existence probability that an interacting species exists at each point (a probability distribution of an interacting species), using an observation point for the interacting species from the observation point specifying section 82. For example, the probability distribution of an interacting species may be calculated by ecological niche modeling. For example, a modeling approach called MaxEnt may be adopted for the ecological niche modeling.

For example, the inhabitation possibility calculator 83 may set, as the inhabitation possibility of each interacting species, the existence probability in a target place with respect to the probability distribution of the interacting species, where a location of the target place is indicated by target-place information.

In this case, the index value calculator 84 may calculate, for example, a total (a sum total) of inhabitation possibilities of respective interacting species as an inhabitation index value for a target place. The inhabitation index value for a target place is dependent on the number of interacting species and the inhabitation possibility of each interacting species inhabiting the target place, and represents (a value corresponding to) an expected value of the number of interacting species. Note that the number of interacting species is dependent in part on the number of species in a species list. Thus, it can also be said that the inhabitation index value dependent on the number of interacting species is dependent on the number of species in a species list.

Moreover, for example, using an observation point for each interacting species and target-place information regarding the interacting species, the inhabitation possibility calculator 83 may specify relationship information indicating a relationship in distance and/or environment between a target place and the observation point (the closeness in distance (or distantness) and/or the environmental similarity). For example, the inhabitation possibility calculator 83 may specify, as the relationship information, whether the target place and the observation point are situated at a distance less than or equal to a specified distance (for example, 100 km) from each other (or in the same region in the same country). Further, for example, the inhabitation possibility calculator 83 may specify, as the relationship information, whether the target place and the observation point are situated in the same country, or whether the target place and the observation point belong to the same climatic zone (for example, whether the target place and the observation point belong to the same climatic zone defined by Köppen's classification of climate.

Here, the observation point for an interacting species is not limited to a single point. In the case in which there is a plurality of observation points for an interacting species, for example, an observation point situated most closely to a target place, or an observation point at which the environment is most similar to the environment in the target place may be used as the observation point for an interacting species when the relationship information is specified.

On the basis of relationship information regarding an interacting species (environment information regarding the interacting species that indicates a relationship of the interacting species with a target place in distance and/or environment), the inhabitation possibility calculator 83 may set the inhabitation possibility indicating the possibility that an interacting species observed at an observation point inhabits a target place. For example, the inhabitation possibility calculator 83 may set the inhabitation possibility indicating that an interacting species observed at an observation point is more likely to inhabit a target place when the target place and the observation point are closer to each other in distance and/or environment.

In this case, the index value calculator 84 may calculate, for example, a total (a sum total) of inhabitation possibilities of respective interacting species as an inhabitation index value for a target place. Likewise, the inhabitation index value for a target place is dependent on the number of interacting species and the inhabitation possibility of each interacting species inhabiting a target place, and represents an expected value of the number of interacting species.

As described above, the inhabitation index value for a target place is calculated dependently on the inhabitation possibility of an interacting species. Thus, upon calculating an inhabitation index value, an interacting species that inhabits the vicinity of a target place is considered to a large extent, whereas an interacting species that does not inhabit the vicinity of the target place is considered to a small extent. This results in calculating an inhabitation index value in consideration of geographical or environmental features of a target place and a habitat of an interacting species (including not only a place that the interacting species actually inhabits, but also a place that the interacting species is expected to inhabit). Thus, the inhabitation index value represents the biodiversity with a high degree of precision from the perspective of interaction.

For example, the integration index value calculator 52 illustrated in Fig. 7 may calculate an integration index value obtained by integrating two, three, or four individual index values, from among four kinds of individual index values that are the α index value, β index value, γ index value, and inhabitation index value described above, on the basis of the two, three, or four kinds of individual index values.

Individual index values of a plurality of individual index values are integrated as necessary after the individual index values are normalized.

When, for example, the Jaccard coefficient is adopted as the β index value, there is no need for normalization since the Jaccard coefficient is a normalized value.

When, for example, the numbers of species are adopted as the α index value, the β index value, and the γ index value, the α index value, the β index value, and the γ index value are normalized by being divided by, for example, the γ index value.

The inhabitation index value is normalized by being divided by, for example, a total number of interacting species.

When, for example, an integration index value obtained by integrating the α index value and the β index value is calculated by multiplication being performed, a value obtained by multiplying an average of normalized α index values for respective species lists for a target place (normalized α index values for cultivated lands that species in a species list inhabit), and an average of normalized β index values for respective list pairs of species lists for the target place (normalized β index values for pairs of two cultivated lands (cultivated-land pairs) that species in two species lists corresponding to a list pair inhabit), is calculated as the integration index value obtained by integrating the α index value and the β index value. For example, when the average of normalized α index values for respective species lists for a target place is 0.4 and the average of normalized β index values for respective list pairs of species lists for the target place is 0.6, 0.024 is calculated as the integration index value.

### <Second Example of Configuration of Calculator 42>

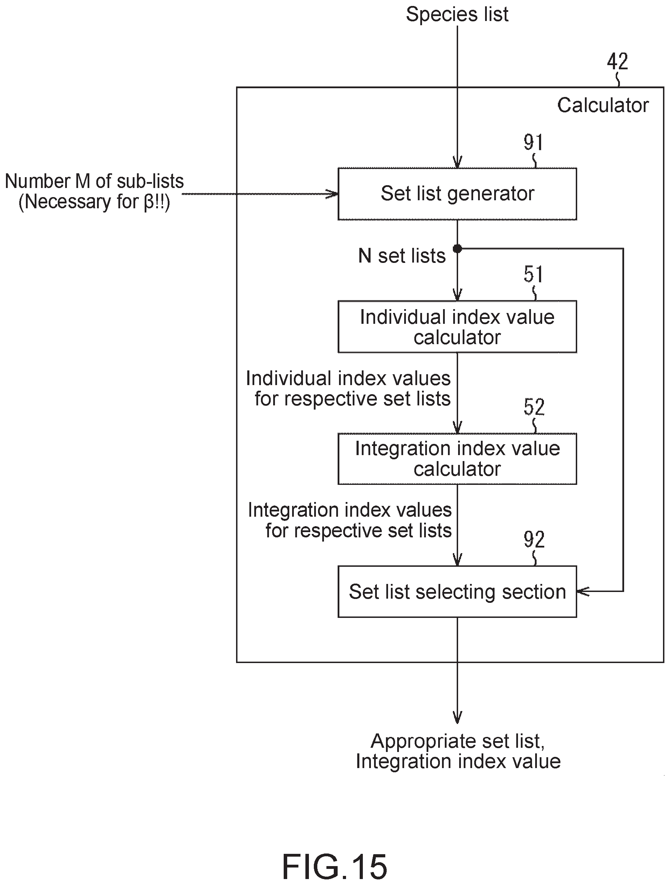

Fig. 15 is a block diagram illustrating a second example of the configuration of the calculator 42 illustrated in Fig. 6.

Note that, in the figure, a portion corresponding to a portion in Fig. 7 is denoted by the same reference numeral as the portion in Fig. 7, and a description thereof is omitted below as appropriate.

In Fig. 15, the calculator 42 includes the individual index value calculator 51, the integration index value calculator 52, a set list generator 91, and a set list selecting section 92.

Thus, the calculator 42 illustrated in Fig. 15 includes the individual index value calculator 51 and the integration index value calculator 52 in common with the calculator 42 illustrated in Fig. 7, and the calculator 42 illustrated in Fig. 15 is different from the calculator 42 illustrated in Fig. 7 in that the set list generator 91 and the set list selecting section 92 are newly provided.

The calculator 42 illustrated in Fig. 7 calculates an integration index value used when a species in a species list inhabits a target place.

On the other hand, the calculator 42 illustrated in Fig. 15 calculates, as an integration index value for each one of a plurality of set lists generated using species lists, an integration index value used when a species in the set list inhabits a target place, where at least one species is given in each of the plurality of set lists. Further, the calculator 42 illustrated in Fig. 15 selects a set list on the basis of an integration index value for the set list. For example, a set list for which an integration index value is greater than or equal to a threshold, or K set lists for which respective integration index values are the top K are selected. Here, K is an integer greater than or equal to one. When K = 1, a set list for which an integration index value is most favorable is selected. For example, the threshold or "K" used as a parameter upon selecting a set list may be set in the server 12 in advance, or may be set according to an operation performed by a user on the terminal 11.

When a plurality of species lists is transmitted for a target place from the terminal 11 to the server 12, for example, each of the plurality of species lists may be adopted as a single set list with no change.

When a single species list is transmitted for the target place from the terminal 11 to the server 12, for example, at least one species is selected from the single species list repeatedly multiple times so that a plurality of set lists in which the selected species is given can be generated.

The set list generator 91 is supplied with at least one species list for a target place from the acquisition section 41 (Fig. 6). Here, in order to simplify the description, it is assumed that the set list generator 91 is supplied with a single species list for a target place, that is, for example, a single species list in which, for example, a plurality of species observed in the target place regardless of cultivated land, or a plurality of species desired to be introduced into the target place are given.

Using a species list from the acquisition section 41, the set list generator 91 generates N set lists in which at least one species is given, and supplies the N set lists to the individual index value calculator 51 and the set list selecting section 92.

When the individual index value calculator 51 calculates an α index or an β index, the set list generator 91 is also supplied with the number M of sub-lists. When the set list generator 91 is supplied with the number M of sub-lists, the set list generator 91 generates a set list only including sub-lists of which the number is the number M of sub-lists. The sub-list is a list in which a species is given. the number M of sub-lists is the number of sub-lists included in a set list, and, for example, M is set according to an operation performed by a user on the terminal 11. For example, the number of cultivated lands corresponding to biotic communities in a target place, or the number of cultivated lands planned to be created in the target place may be adopted as the number M of sub-lists.

In Fig. 15, the individual index value calculator 51 calculates a plurality of kinds of individual index values for N respective set lists from the set list generator 91, and supplies the integration index value calculator 52 with the plurality of kinds of individual index values for the respective set lists. The integration index value calculator 52 calculates, for each set list, an integration index value obtained by integrating, for each set list, the plurality of kinds of individual index values for each set list from the individual index value calculator 51, and supplies the integration index values to the set list selecting section 92.

On the basis of the integration index values for the respective set lists from the integration index value calculator 52, the set list selecting section 92 selects, from the N set lists supplied by the set list generator 91, at least one set list as an appropriate set list in which a species appropriate to increase the biodiversity of the target place. For example, the set list selecting section 92 selects, as an appropriate set list and from the N set lists supplied by the set list generator 91, set lists for which an integration index value from the integration index value calculator 52 is most favorable (maximum).

The set list selecting section 92 supplies the generator 43 (Fig. 6) with the appropriate set list and an integration index value for the appropriate set list.

In this case, the generator 43 generates a presentation UI that presents thereon, for example, the appropriate set list and integration index value supplied by the set list selecting section 92.

Note that a set list may be generated according to an operation performed by a user, that is, a set list may be generated by a species corresponding to operation performed by a user being given in the set list. Note that, when a set list is generated according to an operation performed by a user, a heavy burden is imposed on the user at the time of generating a large number of set lists.

On the other hand, when the set list generator 91 generates a set list using a single species list, a large number of set lists can be generated just by a user inputting species to be included in a single species list. Further, a kind of large-scale search in such a large number of set lists makes it possible to obtain an appropriate set list that increases the biodiversity.

### <Generation of Set List>

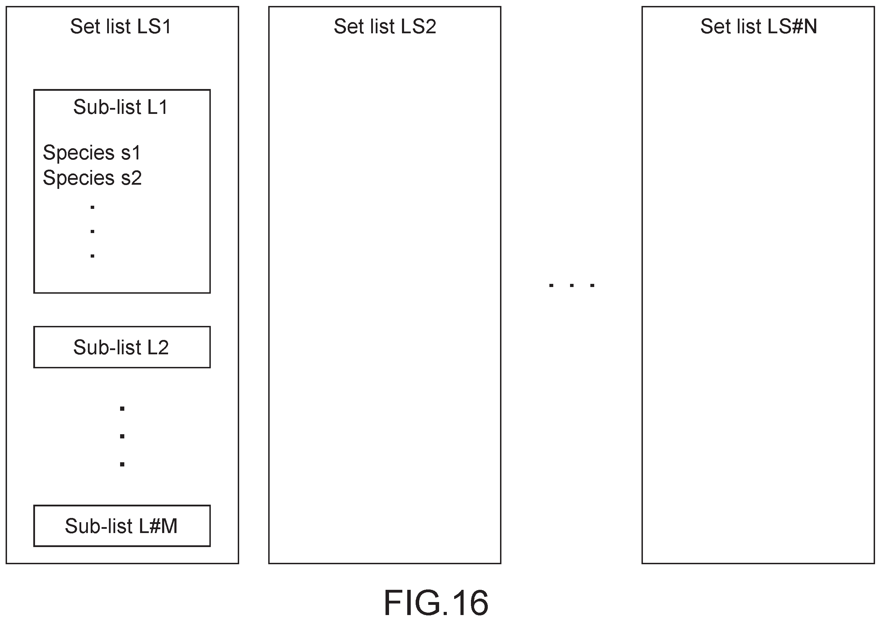

Fig. 16 is a diagram used to describe an example of how the set list generator 91 illustrated in Fig. 15 generates a set list.

When the individual index value calculator 51 calculates an α index or an β index, the set list generator 91 is supplied with the number M of sub-lists, set list generator 91 generates a set list that only includes sub-lists of which the number is the number M of sub-lists.

The set list generator 91 selects at least one species at random from species in a species list from the acquisition section 41, and generates a sub-list L1 in which the at least one selected species s1, s2, ... is given. The set list generator 91 repeatedly performs the selection of species similarly M times to generate M sub-lists L1, L2, ..., and L#M, and generates the set list LS1 including the M sub-lists L1 to L#M, where M represents the number of sub-lists.

The set list generator 91 repeatedly performs the above-described generation of a set list N times to generate N set lists LS1, LS2, ..., and LS#N, where N is a plurality of numbers.

The individual index value calculator 51 calculates a plurality of kinds of individual index values, such as an α index value and a β index value, for the set list LS#n, on the assumption that species in each sub-list L#m included in the set list LS#n inhabit each of cultivated lands that are biotic communities in a target place.

Here, an inhabitation index value for the sub-list L#m may be calculated for each sub-list L#m included in the set list LS#n, that is, an inhabitation index value for a cultivated land may be calculated for each cultivated land on the assumption that species in the sub-list L#m inhabit the cultivated land. Further, an inhabitation index value for a target place may be calculated on the assumption that species in all of the sub-lists L#1 to L#M included in the set list LS#n inhabit (one of cultivated lands in) the target place. When the inhabitation index for a cultivated land is calculated, an average of the (normalized) inhabitation index values for the cultivated lands may be used to calculate an integration index value.

(Names of species in each sub-list L#m included in) An appropriate set list may be displayed on a presentation UI that is generated by the generator 43 and that presents thereon, for example, the appropriate set list and an integration index value, where a user can recognize that species in a single sub-list L#m included in the appropriate set list are species that should inhabit a single cultivated land. In other words, for example, the appropriate set list may be displayed on the presentation UI in a state in which the appropriate set list is divided into the respective sub-lists L#m included in the appropriate set list.

In this case, a user can recognize, by viewing the presentation UI, species that are to be caused to inhabit (that are to be introduced into) each cultivated land in a target place in order to increase the biodiversity. When, for example, an α index value and a β index value are adopted as a plurality of kinds of individual index values, species that are to be caused to inhabit each cultivated land in a target place can be recognized from the perspective of both an α diversity and a β diversity.

Note that, when the individual index values calculated by the individual index value calculator 51 do not include an individual index value such as an α index value or a β index value that is calculated using an idea of a biotic community, the set list generator 91 may generate a set list that includes no sub-list and in which a species selected from a species list is given. It can also be understood that the set list that includes no sub-list and in which a species selected from a species list is given includes a single sub-list in which the species selected from the species list is given.

### <Third Example of Configuration of Calculator 42>

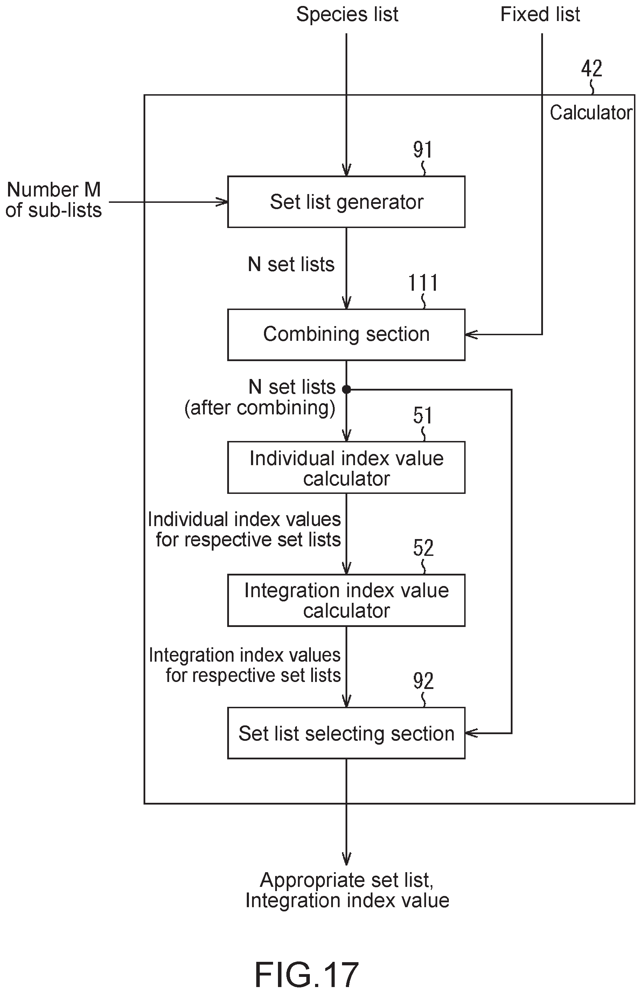

Fig. 17 is a block diagram illustrating a third example of the configuration of the calculator 42 illustrated in Fig. 6.

Note that, in the figure, a portion corresponding to a portion in Fig. 15 is denoted by the same reference numeral as the portion in Fig. 15, and a description thereof is omitted below as appropriate.

In Fig. 15, the calculator 42 includes the individual index value calculator 51, the integration index value calculator 52, the set list generator 91, the set list selecting section 92, and a combining section 111.

Thus, the calculator 42 illustrated in Fig. 17 includes the individual index value calculator 51, the integration index value calculator 52, the set list generator 91, and the set list selecting section 92 in common with the calculator 42 illustrated in Fig. 15, and the calculator 42 illustrated in Fig. 17 is different from the calculator 42 illustrated in Fig. 15 in that the combining section 111 is newly provided.

The combining section 111 is supplied with N set lists by the set list generator 91 and supplied with a fixed list by the acquisition section 41 (Fig. 6).

Here, when an ecosystem of a target place is built, there may be a species, from among species inhabiting the target place currently, that a user wants to leave with no change. For example, in some cases, the user wants to leave, with no change, all of the species inhabiting the target place currently (all of species observed in the target place). Further, there may be a species desired by the user to be introduced into the target place.

However, when the calculator 42 having the configuration of the second example illustrated in Fig. 15 is adopted, an appropriate set list displayed on a presentation UI does not necessarily include a species that a user wants to leave with no change or a species desired by the user to be introduced.

Thus, the calculator 42 illustrated in Fig. 17 can obtain an appropriate set list that includes, for example, a species (hereinafter also referred to as a fixed species) that a user wants to inhabit a target place certainly, where examples of the fixed species include a species that a user wants to leave with no change, and a species desired by the user to be introduced.

In Fig. 17, the terminal 11 generates a fixed list in addition to a species list, and transmits the generated lists to the server 12. In other words, a user operates the terminal 11 to input a fixed species. The terminal 11 generates a fixed list in which the fixed species input by the operation being performed by the user is given, and transmits the fixed list to the server 12. In the server 12, the acquisition section 41 (Fig. 6) acquires the species list and fixed list received from the terminal 11, and supplies the acquired lists to the calculator 42.

In the calculator 42, the combining section 111 is supplied with the fixed list from the acquisition section 41. Further, the combining section 111 is supplied with the N set lists from the set list generator 91. The combining section 111 combines the fixed list from the acquisition section 41 with each of the N set lists from the set list generator 91. In other words, the combining section 111 includes a fixed species of the fixed list in each of the N set lists to generate the N set lists each including the fixed species.

The combining section 111 supplies the individual index value calculator 51 and the set list selecting section 92 with the N set lists after combining the fixed list, where the N set lists after combining the fixed list are obtained by combining the fixed list with each of the N set lists.

Subsequently, in the calculator 42 illustrated in Fig. 17, processing similar to the processing in Fig. 15 is performed on the N set lists after combining the fixed list, and supplies the generator 43 (Fig. 6) with an appropriate set list and an integration index value for the appropriate set list.

In this case, an appropriate set list displayed on a presentation UI generated by the generator 43 includes a fixed species. Thus, a user can recognize species including a fixed species as species that are to be caused to inhabit each cultivated land in a target place in order to increase the biodiversity. For example, when a species currently inhabiting a target place is adopted as a fixed species, an appropriate set list in which a species to be newly introduced into the target place is given, can be obtained in a state in which the species currently inhabiting the target place is kept with no change, in order to increase the biodiversity. As a result, the user can recognize a species to be additionally introduced into a target place in order to increase the biodiversity.

Note that, in Fig. 17, the set list selecting section 92 selects an appropriate set list from set lists after combining a fixed list that are supplied by the combining section 111. However, in Fig. 17, set lists before combining a fixed list that are generated by the set list generator 91 may be supplied to the set list selecting section 92, and the set list selecting section 92 may select, from the set lists before combining the fixed list and as an appropriate set list, a set list that enables an integration index value for the set list after combining the fixed list to be most favorable.

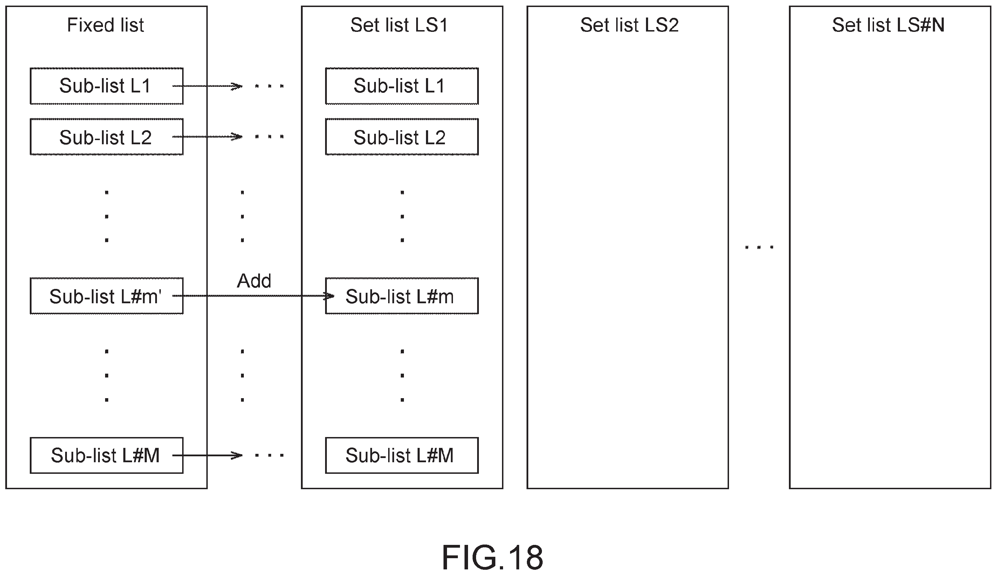

Fig. 18 is a diagram used to describe an example of how a fixed list is combined with a set list by the combining section 111.

As in the case of the set list LS#n described with reference to Fig. 16, the fixed list includes, for example, M sub-lists L1 to L#M, where a fixed species is given in each of the M sub-lists L1 to L#M. A fixed species in a single sub-list L#m included in a fixed list is, for example, a species that a user wants to certainly inhabit a certain cultivated land in a target place.

When a fixed list is combined with a set list, a species in the set list and a (fixed) species in the fixed list are put together to newly generate a set list in which a unique collection of species is given.

When, for example, a fixed list is combined with the set list LS1, an unselected sub-list L#m is selected at random from the set list LS1, and an unselected sub-list L#m' is selected at random from the fixed list. Then, the sub-list L#m' in the fixed list is added to the sub-list L#m in the set list LS1.

The above-described selection of respective sub-lists from the set list LS1 and a fixed list and the above-described addition of the selected sub-list in the fixed list to the selected sub-list in the set list LS1 are performed M times. This results in combining the fixed list to the set list LS1.

Likewise, the fixed list is combined with each of the other set lists LS2 to LS#N.

Here, in addition to the inclusion of the M sub-lists L1 to L#M in the fixed list, the fixed list may include, for example, M' sub-lists L1 to L#M' according to operation performed by a user, where M' is greater than or equal to one and less than M. When the fixed list includes the M' sub-lists L1 to L#M', selection of respective sub-lists from the set list LS#n and a fixed list and addition of the selected sub-list in the fixed list to the selected sub-list in the set list LS#n may be performed M' times, where M' is less than M. In this case, the addition of a fixed species of the selected sub-list in the fixed list is only performed on M' of the M sub-lists included in the set list LS#n. Therefore, (M - M') of the M sub-lists included in the set list LS#n remains unchanged.

Note that, when the fixed list includes M' sub-lists L1 to L#M', a fixed species of the selected sub-list in the fixed list may be added to the selected sub-list in the set list LS#n M' times, as described above, and thereafter, a duplicate sub-list may be selected from the fixed list (M - M') times to add a fixed species of the selected sub-list to a (M - M') sub-list that is included in the set list LS#n and to which the fixed species has not been added.

### <Third Example of Configuration of Calculator 42>

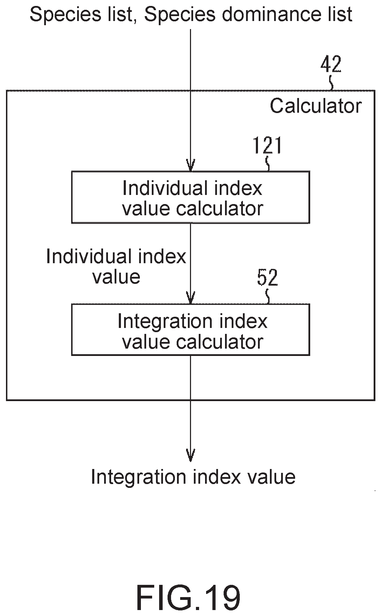

Fig. 19 is a diagram illustrating a third example of the configuration of the calculator 42 illustrated in Fig. 6.

Note that, in the figure, a portion corresponding to a portion in Fig. 7 is denoted by the same reference numeral as the portion in Fig. 7, and a description thereof is omitted below as appropriate.

In the Fig. 19, the calculator 42 includes the integration index value calculator 52 and an individual index value calculator 121.

Thus, the calculator 42 illustrated in Fig. 19 includes the integration index value calculator 52 in common with the calculator 42 illustrated in Fig. 7, and the calculator 42 illustrated in Fig. 19 is different from the calculator 42 illustrated in Fig. 7 in that the individual index value calculator 121 is provided instead of the individual index value calculator 51.

In Fig. 19, the terminal 11 generates a species dominance list according to operation performed by a user, in addition to a species list, and transmits the generated lists to the server 12. In the server 12, the acquisition section 41 (Fig. 6) acquires the species list and species dominance list received from the terminal 11, and supplies the acquired lists to the calculator 42. The species dominance list is a list in which a species dominance representing an extent of a space, in a target place, that is occupied by a species in a species list, is given.

For example, the population size of species may be adopted as the species dominance. Further, when the species is a plant species, a coverage that is a percentage of the plant species covering (a ground surface of) a target place may be adopted as the species dominance. A user may input, by operating the terminal 11, a value for the actually observed plant species as the species dominance. Further, when an ecosystem of a target place is built in the future, the user may input an expected value of the population size of introduction-target species or an expected value of a coverage of the introduction-target species.

The individual index value calculator 121 is supplied with the species list and species dominance list provided by the acquisition section 41 (Fig. 6). Using the species list and species dominance list from the acquisition section 41, the individual index value calculator 121 calculates a plurality of kinds of individual index values corresponding to a plurality of kinds of diversity index values used when a species in the species list inhabits a target place, and supplies the integration index value calculator 52 with the plurality of kinds of individual index values.

### <Example of Configuration of Individual Index Value Calculator 121>

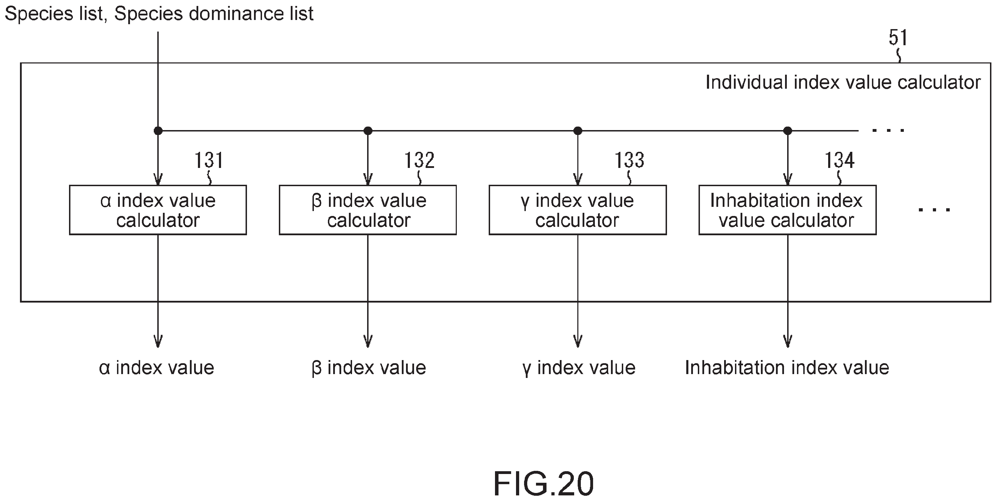

Fig. 20 is a block diagram illustrating an example of a configuration of the individual index value calculator 121 illustrated in Fig. 19.

As in the case of the individual index value calculator 51 illustrated in Fig. 9, the individual index value calculator 121 includes a plurality of calculators respectively calculating various kinds of individual index values. For example, the individual index value calculator 121 includes, for example, an α index value calculator 131, a β index value calculator 132, a γ index value calculator 133, and an inhabitation index value calculator 134.

Calculators, such as the α index value calculator 131 to the inhabitation index value calculator 134, that are included in the individual index value calculator 121 are supplied with a species list and a species dominance list for a target place that are provided by the acquisition section 41 (Fig. 6).

On the basis of the species dominance in the species dominance list from the acquisition section 41, the α index value calculator 131 calculates an α index value used when a species in the species list from the acquisition section 41 is observed in a target place, and supplies the integration index value calculator 52 (Fig. 7) with the α index value as one kind of individual index value.

On the basis of the species dominance in the species dominance list from the acquisition section 41, the β index value calculator 132 calculates a β index value used when a species in the species list from the acquisition section 41 is observed in the target place, and supplies the integration index value calculator 52 with the β index value as one kind of individual index value.

On the basis of the species dominance in the species dominance list from the acquisition section 41, the γ index value calculator 133 calculates a γ index value used when a species in the species list from the acquisition section 41 is observed in the target place, and supplies the integration index value calculator 52 with the γ index value as one kind of individual index value.

On the basis of the species dominance in the species dominance list from the acquisition section 41, the inhabitation index value calculator 134 calculates an inhabitation index value when a species in the species list from the acquisition section 41 is observed in the target place, and supplies the integration index value calculator 52 with the inhabitation index value as one kind of individual index value.

The individual index value calculated by the individual index value calculator 121 is not limited to the α index value, the β index value, the γ index value, and the inhabitation index value. The individual index value calculator 121 may calculate any individual index values of a plurality of kinds of individual index values, as in the case described for the individual index value calculator 51 illustrated in Fig. 9.

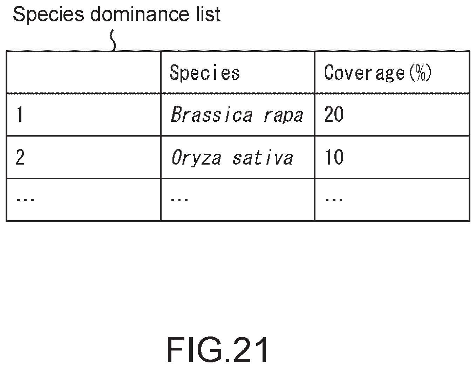

Fig. 21 illustrates an example of a species dominance list.

In addition to (a name of) a species in a species list, the species dominance of the species is given in the species dominance list. A coverage is adopted as the species dominance in the species dominance list illustrated in Fig. 21.

Note that the species dominance may be given in the species list in association with (the name of) the species. When the species dominance is given in the species list, the species dominance list is not necessary.

When the individual index value calculator 121 calculates, on the basis of the species dominance in the species dominance list, various individual index values, such as an α index value, a β index value, a γ index value, and an inhabitation index value, that are used when a species in the species list is observed in a target place, the α index value, the β index value, the γ index value, and the inhabitation index value serve as biodiversity index values that consider not only the species composition in the target place but also spaces occupied by respective species in the target place (whether the space in the target place is occupied by the respective species without being occupied only by a specific species) or the population size of each species inhabiting the target place.

For example, a method performed using an entropy-formula-based formula such as a formula used to calculate the Shannon-Wiener Diversity Index (Shannon Index) may be adopted as a method for calculating an α index value and a γ index on the basis of the species dominance of a species in a species list.

The Shannon-Wiener Diversity Index can be calculated in accordance with a formula "ΣP(i)×logP(i)." In the formula "ΣP(i)×logP(i)", P(i) represents the proportion n(i)/N of the population size n(i) of the i-th species to the total population size N, and ∑ represents summation over all of species.

When the method performed using an entropy-formula-based formula is adopted to calculate an α index and a γ index, the species dominance may be used instead of the formula "ΣP(i)×logP(i)".

For example, a method performed using the weighted UniFrac may be adopted as a method for calculating a β index value on the basis of the species dominance of a species in a species list. With the weighted UniFrac, a difference (similarity) between (communities of) microorganisms is calculated using phylogeny-and-evolution information such as a phylogenetic tree, and the number (the richness) of each microorganism. The weighted UniFrac is disclosed in, for example, Yinglin Xia, Jun Sun, Ding-Geng Chen, "Statistical Analysis of Microbiome Data with R," Springer (https://link.springer.com/book/10.1007/978-981-13-1534-3).

When the method performed using the weighted UniFrac may be adopted as the method for calculating a β index value, the species dominance may be used instead of the number of microorganisms.

As a method for calculating an inhabitation index value on the basis of the species dominance of a species in a species list, there is a method performed using, as a weight (for example, by multiplication), the species dominance of a species, in a species list, that interacts with an interaction species for the inhabitation possibility of the interacting species, where the inhabitation possibility is used to calculate the inhabitation index value.

### <Presentation UI>

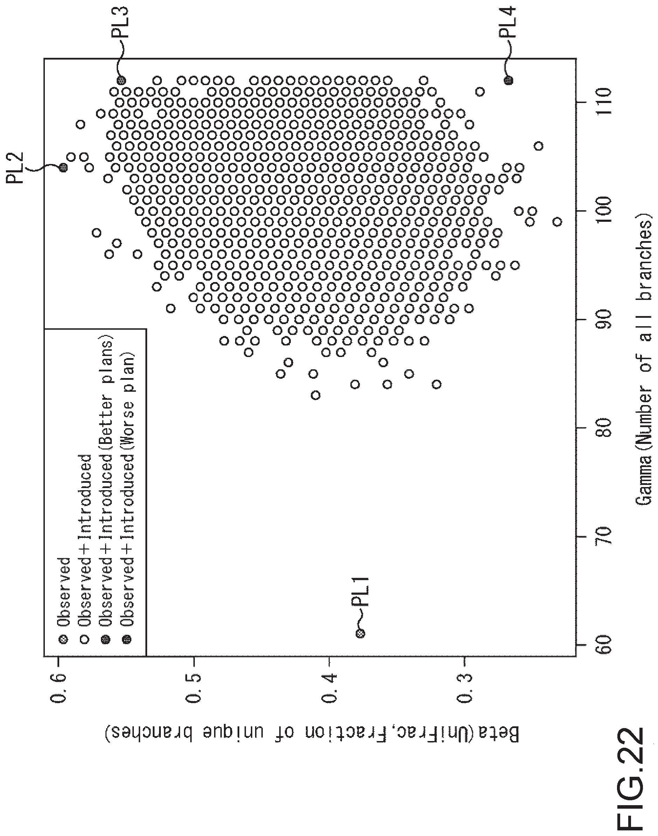

Fig. 22 illustrates an example of performing display on a presentation UI.

The presentation UI may display thereon not only an integration index value and an appropriate set list but also, for example, information used to perform a process of calculating the integration index value, information obtained by performing the process of calculating the integration index value, and information that can be generated using these pieces of information.

For example, the presentation UI may display thereon a graph (hereinafter also referred to as a set list plotting graph) on which marks representing a set list are plotted, with a plurality of kinds of diversity index values calculated by the calculator 42 being axes.

Fig. 22 illustrates an example of displaying a set list plotting graph.

A β index value and a γ index value are adopted as the plurality of kinds of diversity index values for the set list plotting graph illustrated in Fig. 22, where a vertical axis is an axis representing the β index, and a horizontal axis is an axis representing the γ index. Further, circles that are marks (hereinafter also referred to as set list marks) representing set lists after combining a fixed list (observed + introduced) that are obtained by the combining section 111 of the calculator 42 illustrated in Fig. 17, that is, N (= 10000) set lists including fixed species, are respectively plotted at positions each indicating a β index value and a γ index value for a corresponding one of the set lists, where N represents a plurality of numbers. Note that the number of set list marks on the set list plotting graph illustrated in Fig. 22 is less than N = 10000. The reason is that some set list marks are plotted at the same position.

The set list plotting graph illustrated in Fig. 22 enables a user to easily recognize a β index value and a γ index value for each set list, and to compare β index values for different set lists and compare γ index values for different set lists.

Not only set list marks for set lists after combining a fixed list, but also a set list mark PL1 for the fixed list (observed) is plotted on the set list plotting graph illustrated in Fig. 22, with the fixed list (Fig. 18) combined with the set lists being considered one set list.

A set list represented by a set list mark situated closer to the upper right on the set list plotting graph illustrated in Fig. 22 exhibits a greater β index value and a greater γ index value, and thus also exhibits a greater integration index value. A user can easily recognize that a plan on which species in a set list situated in an upper-right portion on the set list plotting graph, that is, for example, a set list represented by a set list mark PL2 or PL3 inhabit a target place, is a plan (a better plan(s)) appropriate to increase the biodiversity of the target place.

On the other hand, a set list represented by a set list mark situated closer to the lower right, the upper left, or the lower left on the set list plotting graph illustrated in Fig. 22 exhibits at least one of a lesser β index value or a lesser γ index value, and thus also exhibits a lesser integration index value. For example, a set list situated in a lower-right portion on the set list plotting graph, that is, for example, a set list represented by a set list mark PL4 exhibits a greater γ index value. Thus, a plan on which a species in the set list inhabits a target place looks like a plan appropriate to increase the biodiversity. However, the set list represented by the set list mark PL4 exhibits a lesser β index value, and thus also exhibits a lesser integration index value. The plan on which the set list represented by the set list mark PL4 inhabits a target place is a plan (a worse plan) inappropriate to increase the biodiversity from the perspective of a β diversity.

A user can check species in a set list for which a set list mark is plotted on a set list plotting graph. When, for example, a user specifies a set list mark on a set list plotting graph by performing operation such as clicking or tapping, (information regarding) species in the set list represented by the set list mark specified by the user is displayed on a presentation UI.

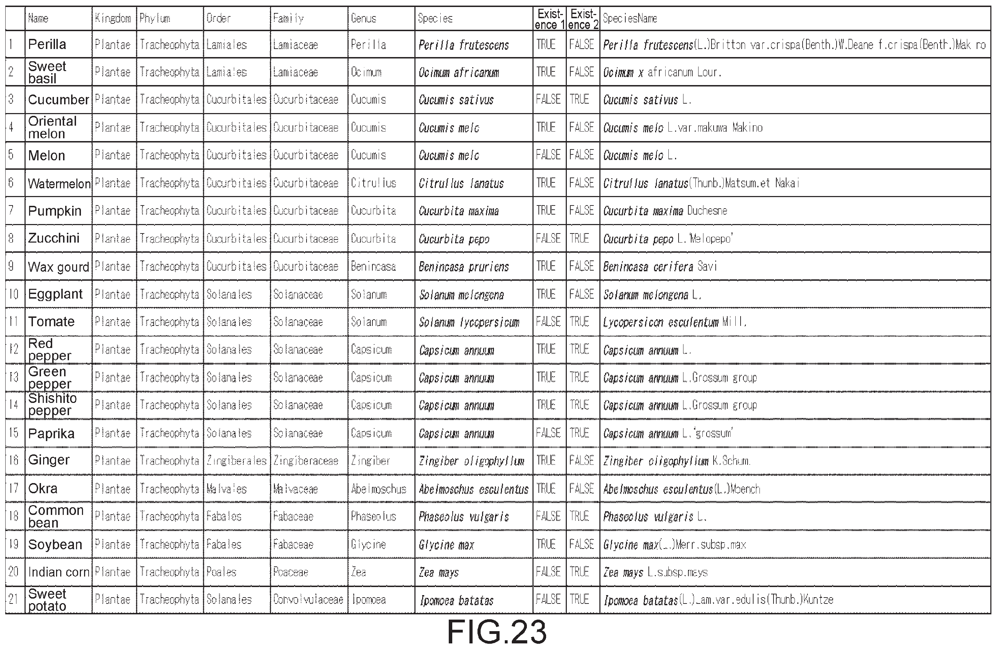

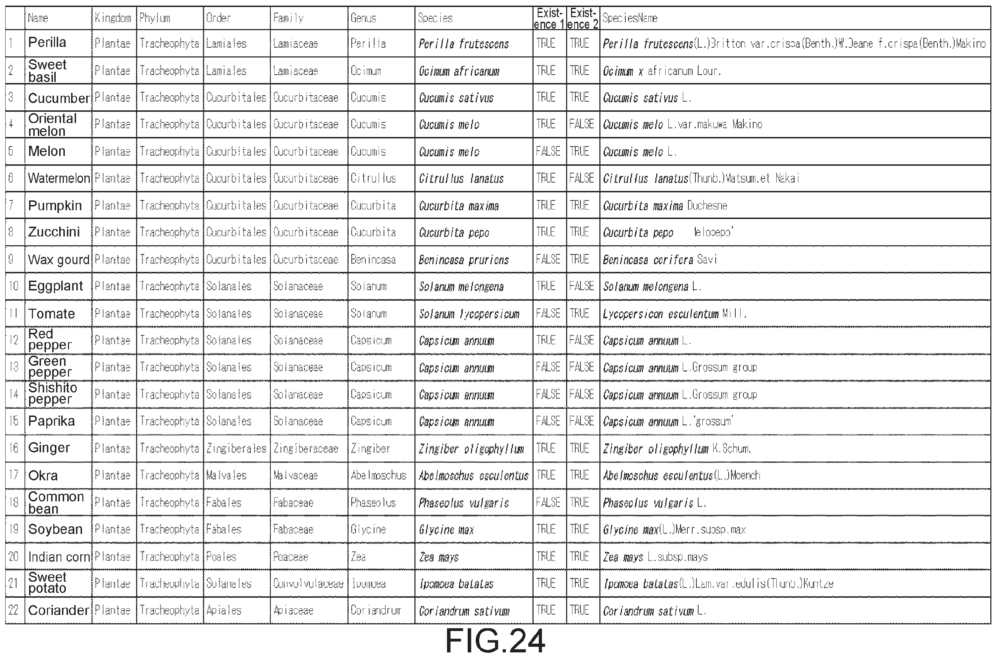

Figs. 23 and 24 illustrate examples of display performed on a presentation UI that displays thereon species in a set list represented by a set list mark specified by a user.

Fig. 23 illustrates an example of displaying species in a set list represented by the set list mark PL2 corresponding to a plan appropriate to increase the biodiversity of the target place in Fig. 22. Fig. 24 illustrates an example of displaying species in a set list represented by the set list mark PL4 corresponding to a plan inappropriate to increase the biodiversity of the target place in Fig. 22.

Names of species in species lists used to generate a set list are arranged (in a row direction) in each of Figs. 23 and 24. In Figs. 23 and 24, "Name" represents a common name, and items from "Kingdom" to "Species" respectively represent phylogenetic taxonomic ranks that are the kingdom, the phylum, the order, the family, the genus, and the species. Note that "Species" also represents a scientific name. "SpeciesName" represents a name obtained by adding a variety name, a subspecies name, or a cultivar name to the scientific name. Note that, in each of Figs. 23 and 24, the species are arranged such that species that are closely related to each other in phylogenetic taxonomy are situated closely to each other.

In each of Figs. 23 and 24, the number M of sub-lists is set to two, that is, the number of sub-lists included in a set list is set to two, and "Existence 1" and "Existence 2" respectively represent whether the respective two sub-lists each include the species. Thus, it can be said that the presentation UI illustrated in each of Figs. 23 and 24 presents thereon whether species in a species list exist in a set list.

"Existence 1" and "Existence 2" in each of Figs. 23 and 24 each indicate "TRUE" when a species in a species list is included in the sub-list, and each indicate "FALSE" when the species in the species list is not included in the sub-list.

"Existence 1" and "Existence 2" on the presentation UI illustrated in each of Figs. 23 and 24 enable a user to recognize various information regarding species in a corresponding set list (a set list represented by a set list mark specified by the user when the presentation UI illustrated in each of Figs. 23 and 24 is displayed).

For example, a user can recognize that a corresponding set list includes a species for which at least one of "Existence 1" or "Existence 2" in combination indicates "TRUE", that is, the user can recognize details of species in the corresponding set list. Further, the user can recognize details (the species composition) of species in different set lists and compare the species in the different set lists.

When, for example, there are a large number of combinations of "Existence 1" and "Existence 2" in which at least one of them indicates "TRUE", the user can recognize that the corresponding set list exhibits a greater γ index value.

When, for example, there are a large number of combinations of "Existence 1" and "Existence 2" in which both of them indicate "FALSE", the user can recognize that the corresponding set list exhibits a lesser γ index value.

When, for example, there are a large number of combinations of "Existence 1" and "Existence 2" in which both of them indicate "TRUE", the user can recognize that the corresponding set list exhibits a lesser β index value.

When, for example, there are a large number of combinations of "Existence 1" and "Existence 2" in which one of them indicates "TRUE" and another of them indicates "FALSE", the user can recognize that the corresponding set list exhibits a greater β index value.

On the presentation UI illustrated in Fig. 23, there are a large number of combinations of "Existence 1" and "Existence 2" in which at least one of them indicates "TRUE", whereas there are also a large number of combinations of "Existence 1" and "Existence 2" in which one of them indicates "TRUE" and another of them indicates "FALSE." Thus, the user can recognize that the corresponding set list exhibits both a greater γ index value and a greater β index value and further exhibits a greater integration index value. Further, the user can recognize that a species for which one of "Existence 1" and "Existence 2" in combination indicates "TRUE" and another of them indicates "FALSE" contributes to a greater β index (and thus an increase in biodiversity).

On the presentation UI illustrated in Fig. 24, there are a large number of combinations of "Existence 1" and "Existence 2" in which at least one of them indicates "TRUE." However, there are a small number of combinations of "Existence 1" and "Existence 2" in which one of them indicates "TRUE" and another of them indicates "FALSE", whereas there are a large number of combinations of "Existence 1" and "Existence 2" in which both of them indicate "TRUE." Thus, the large number of combinations of "Existence 1" and "Existence 2" in which at least one of them indicates "TRUE" enables the user to recognize that the corresponding set list exhibits a greater γ index value. Further, the large number of combinations of "Existence 1" and "Existence 2" in which both of them indicate "TRUE" enables the user to recognize that the corresponding set list exhibits a lesser β index value. Furthermore, the lesser β index value enables the user to recognize that the corresponding set list also exhibits a lesser integration index value. Then, the user can recognize that a species for which "Existence 1" and "Existence 2" in combination both indicate "TRUE" results in the lesser integration index value.

Further, on the presentation UI illustrated in each of Figs. 23 and 24, species are arranged such that species that are closely related to each other in phylogenetic taxonomy are situated closely to each other, as described above. Thus, for example, the user can recognize a tendency of a relationship between largeness (smallness) of the number of closely related species and lesserness (greatness) of the β index value in the set list.

Note that, moreover, using, for example, the integration index value as a grade, a frequency distribution that indicates frequency of a set list belonging to each grade may be displayed on the presentation UI.

Further, the integration index value may be corrected as necessary. For example, the integration index value may be corrected on the basis of a relationship between species in a species list or a set list, or a relationship between a species in a species list or a set list and the environment in a target place. Specifically, for example, when there is a co-beneficial relationship or a companion-plant relationship between species in a species list or a set list, a positive correction may be performed on the integration index value. Further, for example, when the environment, such as a moisture amount in soil and climate, in a target place is suitable for a species in a species list or a set list to inhabit (when the environment in the target place satisfies requirement of inhabitation of the species), a positive correction may be performed on the integration index value. On the other hand, for example, when there is a hostile relationship between species in a species list or a set list or when the environment in the target place is not suitable for a species in a species list or a set list to inhabit, a negative correction may be performed on the integration index value.

All of or a portion of the configuration examples described above may be used in combination to the extent that no conflict arises. For example, the individual index value calculator 121 illustrated in Fig. 19 may be used in the calculator 42 illustrated in Fig. 15 or 17 instead of using the individual index value calculator 51.

Here, in the specification, the processes performed by a computer in accordance with a program do not necessarily have to be chronologically performed in the order of the description in the flowchart. In other words, the processes performed by a computer in accordance with a program include processes performed in parallel or individually (for example, parallel processing or processing performed using an object).

Further, the program may be a program on which processing is performed by a single computer (processor) or may be a program on which distributed-processing is performed by a plurality of computers. Furthermore, the program may be transferred to a remote computer to be executed by the remote computer.

Further, the system as used herein refers to a collection of a plurality of components (such as apparatuses and modules (parts)) and it does not matter whether all of the components are in a single housing. Thus, a plurality of apparatuses accommodated in separate housings and connected to one another via a network, and a single apparatus in which a plurality of modules is accommodated in a single housing are both systems.

Note that the embodiment of the present technology is not limited to the examples described above, and various modifications may be made thereto without departing from the scope of the present technology.

For example, the present technology may have a configuration of cloud computing in which a single function is shared to be cooperatively processed by a plurality of apparatuses via a network.

Further, the respective steps described using the flowchart described above may be performed by a single apparatus, or may be shared to be performed by a plurality of apparatuses.

Furthermore, when a single step includes a plurality of processes, the plurality of processes included in the single step may be performed by a single apparatus, or may be shared to be performed by a plurality of apparatuses.

Further, the effects described herein are not limitative but are merely illustrative, and other effects may be provided.

Note that the present disclosure may relate to at least "No Poverty", "Zero Hunger", "Climate Action", and "Life on Land", which are the Sustainable Development Goals 1, 2, 13, and 15, respectively, from among the Sustainable Development Goals (SDGs) established in the United Nations Summit in 2015.

Synecoculture (registered trademark) or Kyosei Nouhou (registered trademark) used for the present technology makes it possible to increase the biodiversity, and thus to grow plants while controlling an ecosystem such that the plants can withstand a climate change due to natural disasters such as drought or landslide disasters. Further, Synecoculture (registered trademark) or Kyosei Nouhou (registered trademark) makes it possible to increase an amount of greenhouse gas (greenhouse gases (GHG)) fixation in order to create an environment in which various plants grow in a mixed and dense manner, and thus to contribute toward reducing emissions of greenhouse gases due to fertilizer or agricultural chemicals not being used.

Note that the present technology may take the following configurations.

<1> An information processing apparatus, including
   a calculator that calculates, on the basis of a plurality of kinds of diversity index values related to biodiversity, an integration index value obtained by integrating the plurality of kinds of diversity index values.
<2> The information processing apparatus according to <1>, in which
   the calculator calculates the plurality of kinds of diversity index values.
<3> The information processing apparatus according to <1>, in which
   the calculator calculates, as an integration index value for a species list in which species are given, the integration index value used when the species in the species list inhabits a target place for which the integration index value is to be calculated.
<4> The information processing apparatus according to <3>, in which
   the calculator calculates the plurality of kinds of diversity index values used when the species in the species list inhabits the target place.
<5> The information processing apparatus according to <3>, in which
   on the basis of a species dominance representing an extent of a space, in the target place, that is occupied by the species in the species list, the calculator calculates the plurality of kinds of diversity index values used when the species in the species list inhabits the target place.
<6> The information processing apparatus according to any one of <3> to <5>, in which
   the plurality of kinds of diversity index values is at least two of diversity index values that include index values respectively representing an α diversity, a β diversity, a γ diversity, a functional diversity, a diversity of useful plants, a crop yield, an amount of carbon dioxide fixation, and a strength of an ecosystem service, and an inhabitation index value calculated on the basis of an inhabitation possibility indicating the possibility that an interacting species that is a species that interacts with the species in the species list inhabits the target place.
<7> The information processing apparatus according to any one of <3> to <6>, in which
   the plurality of kinds of diversity index values includes two diversity index values that tend to exhibit a trade-off relationship.
<8> The information processing apparatus according to any one of <3> to <7>, further including
   a generator that generates a presentation user interface (UI) that presents thereon the integration index value for the species list.
<9> The information processing apparatus according to any one of <3> to <8>, further including
   an acquisition section that acquires the species list transmitted by a terminal.
<10> The information processing apparatus according to <1>, in which
   the calculator calculates, as an integration index value for a set list in which a species is given, the integration index value used when the species in the set list inhabits the target place for which the integration index value is to be calculated, and
   the calculator selects at least one of a plurality of the set lists on the basis of the integration index values for the plurality of the set lists.
<11> The information processing apparatus according to <10>, in which
   the calculator generates the plurality of the set lists using a species list in which species are given.
<12> The information processing apparatus according to <11>, in which
   the calculator generates the set list including a species in a fixed list in which the species is given.
<13> The information processing apparatus according to <11> or <12>, in which
   the calculator selects the set list for which the integration index value is most favorable.
<14> The information processing apparatus according to any one of <11> to <13>, further including
   a generator that generates a presentation user interface (UI) that presents thereon the set list selected on the basis of the integration index value for the set list.
<15> The information processing apparatus according to <14>, in which
   the generator generates the presentation UI presenting thereon the integration index value for the set list selected on the basis of the integration index value for the set list.
<16> The information processing apparatus according to <14> or <15>, in which
   the generator generates the presentation UI presenting thereon a graph on which marks representing the set list are plotted, with the plurality of kinds of diversity index values being axes.
<17> The information processing apparatus according to any one of <14> to <16>, in which
   the generator generates the presentation UI presenting thereon whether the species in the species list exist in the set list.
<18> The information processing apparatus according to any one of <11> to <17>, further including
   an acquisition section that acquires the species list transmitted by a terminal.
<19> An information processing method, including
   calculating, on the basis of a plurality of kinds of diversity index values related to biodiversity, an integration index value obtained by integrating the plurality of kinds of diversity index values.
<20> A program that causes a computer to operate as a calculator that calculates, on the basis of a plurality of kinds of diversity index values related to biodiversity, an integration index value obtained by integrating the plurality of kinds of diversity index values.

### Reference Signs List

- 10: information processing system
- 11-1 to 11-4: terminal
- 12: server
- 13: DB
- 14: network
- 21: communication section
- 22: computation section
- 23: input/output section
- 24: storage
- 25: positioning section
- 26: sensor section
- 31: communication section
- 32: computation section
- 33: input/output section
- 34: storage
- 41: acquisition section
- 42: calculator
- 43: generator
- 51: individual index value calculator
- 52: integration index value calculator
- 61: α index value calculator
- 62: β index value calculator
- 63: γ index value calculator
- 64: inhabitation index value calculator
- 71: list pair generator
- 72: index value calculator
- 81: interacting species specifying section
- 82: observation point specifying section
- 83: inhabitation possibility calculator
- 84: index value calculator
- 91: set list generator
- 92: set list selecting section
- 111: combining section
- 121: individual index value calculator
- 131: α index value calculator
- 132: β index value calculator
- 133: γ index value calculator
- 134: inhabitation index value calculator

## Claims

1. An information processing apparatus, comprising
a calculator that calculates, on a basis of a plurality of kinds of diversity index values related to biodiversity, an integration index value obtained by integrating the plurality of kinds of diversity index values.

2. The information processing apparatus according to claim 1, wherein
the calculator calculates the plurality of kinds of diversity index values.

3. The information processing apparatus according to claim 1, wherein
the calculator calculates, as an integration index value for a species list in which species are given, the integration index value used when the species in the species list inhabits a target place for which the integration index value is to be calculated.

4. The information processing apparatus according to claim 3, wherein
the calculator calculates the plurality of kinds of diversity index values used when the species in the species list inhabits the target place.

5. The information processing apparatus according to claim 3, wherein
on a basis of a species dominance representing an extent of a space, in the target place, that is occupied by the species in the species list, the calculator calculates the plurality of kinds of diversity index values used when the species in the species list inhabits the target place.

6. The information processing apparatus according to claim 3, wherein
the plurality of kinds of diversity index values is at least two of diversity index values that include index values respectively representing an α diversity, a β diversity, a γ diversity, a functional diversity, a diversity of useful plants, a crop yield, an amount of carbon dioxide fixation, and a strength of an ecosystem service, and an inhabitation index value calculated on a basis of an inhabitation possibility indicating the possibility that an interacting species that is a species that interacts with the species in the species list inhabits the target place.

7. The information processing apparatus according to claim 3, wherein
the plurality of kinds of diversity index values includes two diversity index values that tend to exhibit a trade-off relationship.

8. The information processing apparatus according to claim 3, further comprising
a generator that generates a presentation user interface (UI) that presents thereon the integration index value for the species list.

9. The information processing apparatus according to claim 3, further comprising
an acquisition section that acquires the species list transmitted by a terminal.

10. The information processing apparatus according to claim 1, wherein
the calculator calculates, as an integration index value for a set list in which a species is given, the integration index value used when the species in the set list inhabits the target place for which the integration index value is to be calculated, and
the calculator selects at least one of a plurality of the set lists on a basis of the integration index values for the plurality of the set lists.

11. The information processing apparatus according to claim 10, wherein
the calculator generates the plurality of the set lists using a species list in which species are given.

12. The information processing apparatus according to claim 11, wherein
the calculator generates the set list including a species in a fixed list in which the species is given.

13. The information processing apparatus according to claim 11, wherein
the calculator selects the set list for which the integration index value is most favorable.

14. The information processing apparatus according to claim 11, further comprising
a generator that generates a presentation user interface (UI) that presents thereon the set list selected on a basis of the integration index value for the set list.

15. The information processing apparatus according to claim 14, wherein
the generator generates the presentation UI presenting thereon the integration index value for the set list selected on the basis of the integration index value for the set list.

16. The information processing apparatus according to claim 14, wherein
the generator generates the presentation UI presenting thereon a graph on which marks representing the set list are plotted, with the plurality of kinds of diversity index values being axes.

17. The information processing apparatus according to claim 14, wherein
the generator generates the presentation UI presenting thereon whether the species in the species list exist in the set list.

18. The information processing apparatus according to claim 11, further comprising
an acquisition section that acquires the species list transmitted by a terminal.

19. An information processing method, comprising
calculating, on a basis of a plurality of kinds of diversity index values related to biodiversity, an integration index value obtained by integrating the plurality of kinds of diversity index values.

20. A program that causes a computer to operate as a calculator that calculates, on a basis of a plurality of kinds of diversity index values related to biodiversity, an integration index value obtained by integrating the plurality of kinds of diversity index values.
